# EUROPEAN PATENT SPECIFICATION

(11) **EP 4 497 234 B1**
(45) Date of publication and mention of the grant of the patent: **29.04.2026**
(21) Application number: 22730085.2
(22) Date of filing: 16.05.2022
(51) Int. Cl.: H04L 67/14, H04L 67/141, H04L 69/14, H04L 67/563

(54) **SENDING DATA USING STEERING IN A SELECTED QUIC CONNECTION**
SENDEN VON DATEN UNTER VERWENDUNG VON LENKUNG IN EINER AUSGEWÄHLTEN QUIC-VERBINDUNG
ENVOI DE DONNÉES À L'AIDE D'UNE DIRECTION DANS UNE CONNEXION QUIC SÉLECTIONNÉE

(30) Priority: 23.03.2022 GR 20220100259
(43) Date of publication of application: 29.01.2025
(73) Proprietor: Lenovo (Singapore) Pte. Ltd, New Tech Park 556741 (SG)
(72) Inventor: SALKINTZIS, Apostolis, 15354 Athens (GR)
(74) Representative: Marks & Clerk LLP
(86) International application number: PCT/EP2022/063166
(87) International publication number: WO 2023/179891

(56) References cited:
- WO-A1-2021/170248
- FR-A1- 3 096 533
- US-A1- 2020 120 015
- US-A1- 2022 311 746

## Description

### FIELD

The subject matter disclosed herein relates generally to wireless communications and more particularly relates to enhancements to ATSSS using QUIC stream-aware steering mode.

### BACKGROUND

Access Traffic Steering, Switching and Splitting ("ATSSS") functionality enables the establishment of a multiaccess protocol data unit ("MA PDU)" session between a UE and a UPF, and policy-controlled routing of data traffic over different access networks.

WO 2021/170248 A1 discloses a system for steering the traffic of the multi-access data connection over a plurality of steering connections.

US 2020/120015 A1 discloses a method of communication, in which a communicating device is situated behind a residential gateway able to implement the QUIC protocol and connected to a plurality of paths on which the gateway can dispatch data packets received from the communicating device.

FR 3 096 533 A1 discloses a method for managing a communication between a first terminal and a second terminal in a communication network.

### BRIEF SUMMARY

Disclosed are procedures for multipath QUIC for ATSSS using stream-aware steering mode. Said procedures may be implemented by apparatus, systems, methods, or computer program products.

One method of a User Equipment ("UE") producer for multipath QUIC for ATSSS using stream-aware steering mode includes establishing a multiaccess data connection with a mobile communication network, the multiaccess data connection configured to apply a set of steering rules. Here, each steering rule contains at least a traffic descriptor and a steering mode. The method includes establishing a plurality of QUIC connections, each QUIC connection supporting data transmission over a first access network and a second access network different than the first access network. The method includes detecting a data packet to be transmitted via the multiaccess data connection and selecting a first steering rule in the set of steering rules, where the first steering rule contains a first steering mode and a first traffic descriptor that matches the data packet. The method includes selecting a first QUIC connection of the plurality of the QUIC connections to be used for sending the data packet. The method includes allocating a new stream in the first QUIC connection, where the new stream is configured to transmit data traffic using the first steering mode and sending the data packet using the new stream.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a block diagram illustrating one embodiment of a wireless communication system for multipath QUIC for ATSSS using stream-aware steering mode;
Figure 2A is a call-flow diagram illustrating one embodiment of a procedure for data transfer over a multiaccess Protocol Data Unit ("MA PDU") Session that contains a plurality of multipath QUIC connections;
Figure 2B is a continuation of the call-flow diagram of Figure 2A;
Figure 2C is a continuation of the call-flow diagrams of Figures 2A and 2B;
Figure 3 is a diagram illustrating one embodiment of multipath QUIC connections in a MA PDU Session;
Figure 4 is a diagram illustrating one embodiment of user-plane operation on multipath QUIC connections in a MA PDU Session;
Figure 5A is a detailed view of the user-plane operation of Figure 4 showing QUIC streams associated with each multipath QUIC connection;
Figure 5B is a detailed view of the user-plane operation of Figure 4 showing uplink and downlink QUIC streams associated with a multipath QUIC connection;
Figure 6A is a diagram illustrating a protocol stack used by a multipath QUIC steering functionality for uplink data transmission;
Figure 6B is a diagram illustrating a protocol stack used by a multipath QUIC steering functionality for downlink data transmission;
Figure 7 is a block diagram illustrating one embodiment of a user equipment apparatus that may be used for multipath QUIC for ATSSS using stream-aware steering mode;
Figure 8 is a block diagram illustrating one embodiment of a network apparatus that may be used for multipath QUIC for ATSSS using stream-aware steering mode; and
Figure 9 is a flowchart diagram illustrating one embodiment of a method for multipath QUIC for ATSSS using stream-aware steering mode.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The call-flow diagrams, flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the call-flow, flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatus for sending data traffic in a multipath PDU Session using multipath QUIC transport and stream-aware traffic steering. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

As already specified in Third-Generation Partnership Project ("3GPP") specifications, a UE capable of supporting Access Traffic Steering, Switching, and/or Splitting ("ATSSS"), can simultaneously communicate with a 5G Core network ("5GC") over a 3GPP access network (e.g., NG-RAN) and over a non-3GPP access network (e.g., WLAN). In such embodiments, the traffic exchanged between the UE and a Remote Host can either be distributed over both accesses (e.g., for bandwidth aggregation) or can be sent on the "best" access only, e.g., on the access characterized by the smallest latency, or the smallest Round-Trip Time ("RTT"). In the uplink ("UL") direction, the UE decides how to distribute the traffic across the two accesses based on steering policy rules (called ATSSS rules) provided by the network. Similarly, in the downlink ("DL") direction, the UPF at the edge of 5GC decides how to distribute the traffic across the two accesses based on corresponding steering policy rules (called N4 rules). Note that current 3GPP specifications only support ATSSS for two access paths.

ATSSS functionality enables the establishment of a multiaccess PDU ("MA PDU") session between a UE and a UPF, and policy-controlled routing of data traffic over different access networks. Essentially, an MA PDU session is a multipath data connection between a UE and a UPF that can transfer data traffic using a first path over a 3GPP access network (e.g., NR access or E-UTRA access) and a second path over a non-3GPP access network (e.g., Wi-Fi or wireline access). How the data traffic of the MA PDU session is routed across the two access networks is defined by a steering functionality and by a steering mode.

Two steering functionalities have been defined in 3GPP Technical Specification ("TS") 23.501: (a) the Multi-Path TCP ("MPTCP") steering functionality and (b) the ATSSS-Low Layer ("ATSSS-LL") steering functionality. However, both of these steering functionalities come with several limitations. For example, the MPTCP steering functionality can be applied only to steer the traffic of TCP traffic, but cannot be applied to steer the traffic of non-TCP traffic. Also, the ATSSS-LL steering functionality does not support the measurement of the transmission delay of the two accesses, so it cannot steer the traffic to the access with the smallest delay, unless an additional protocol is defined for delay measurements.

Accordingly, there is need for a new steering functionality that overcomes these limitations of the conventional ATSSS solutions and improves the performance. The intention of the present disclosure is to specify such a new steering functionality and, in particular, to specify a low-layer steering functionality based on the Internet Engineering Task Force ("IETF") QUIC protocol (i.e., a general-purpose transport layer network protocol). The QUIC protocol is used between the UE and the UPF and it creates multiple QUIC connection over each access network, each QUIC connection used to carry the data traffic of a QoS flow. In various embodiments, the QUIC protocol uses User Datagram Protocol at the transport layer for the multiple QUIC connections. While IETF's use of the term "QUIC" is not an acronym (i.e., it is just the name of the protocol), in other references the term "QUIC" is interpreted as an acronym for "Quick UDP Internet Connections."

To overcome the limitations of these two steering functionalities, the present disclosure presents enhanced QUIC-based steering functionality operating in the UE and in the UPF, which applies the QUIC protocol and its multipath extensions (hence called Multipath QUIC ("MPQUIC") steering functionality) to support multipath data transmission between the UE and UPF using all access types of the MA PDU session.

According to a first solution, for each QUIC connection used by the MPQUIC steering functionality, a QoS flow associated with this QUIC connection is negotiated between the UE and UPF. This is achieved by using either a new HTTP/3 SETTINGS parameter (existing HTTP/3 SETTINGS parameters are defined in draft-ietf-quic-http) or by using a new QUIC transport parameter (existing QUIC transport parameters are defined in IETF Request For Comment ("RFC") 9000).

According to a second solution, for each data flow (aka User Datagram Protocol ("UDP") flow) to be transmitted using the MPQUIC steering functionality, it is selected whether datagram or stream transport mode should be applied. The stream transport mode is selected when the packets of the data flow should be received in-sequence and without duplications. Otherwise, the datagram transport mode is selected.

According to a third solution, for each data flow (aka UDP flow) to be transmitted using the MPQUIC steering functionality, a QUIC connection is selected, and a new stream is allocated on this QUIC connection. This stream is configured to transmit data traffic using a specific steering mode, which is determined from the ATSSS rules of the MA PDU session, i.e., from finding a ATSSS rule matching the data flow. This enables the MPQUIC steering functionality to apply stream-aware traffic steering, that is, to apply different traffic steering modes for data traffic transmitted over, or associated with, different QUIC streams.

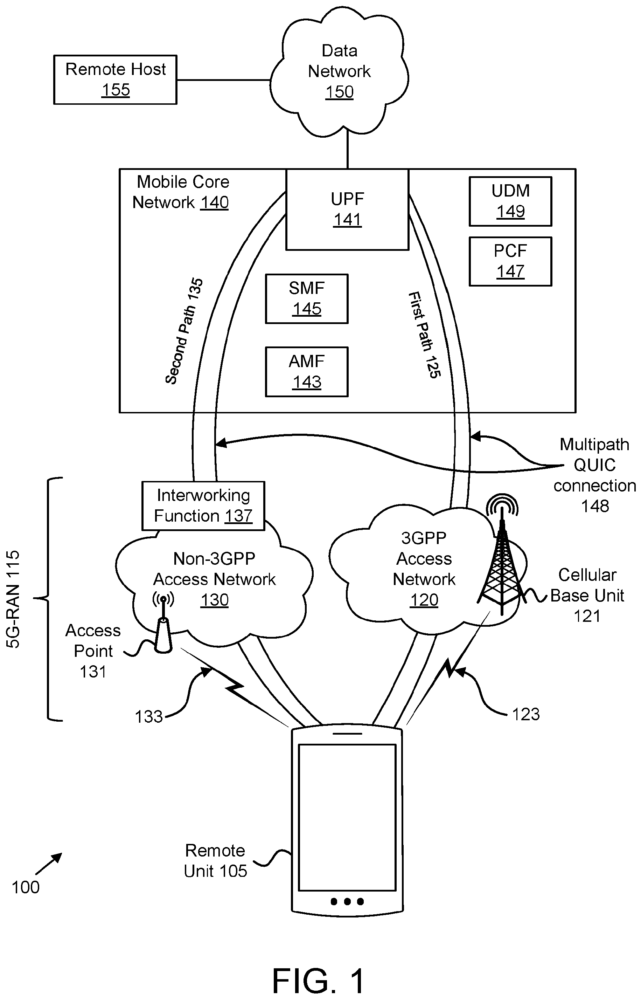

Figure 1 depicts a wireless communication system 100 for multipath QUIC for ATSSS using stream-aware steering mode, according to embodiments of the disclosure. In one embodiment, the wireless communication system 100 includes at least one remote unit 105, a 5G-RAN 115, and a mobile core network 140. The 5G-RAN 115 and the mobile core network 140 form a mobile communication network. The 5G-RAN 115 may be composed of a 3GPP access network 120 containing at least one cellular base unit 121and/or a non-3GPP access network 130 containing at least one access point 131. The remote unit communicates with the 3GPP access network 120 using 3GPP communication links 123 and communicates with the non-3GPP access network 130 using non-3GPP communication links 133.

Even though a specific number of remote units 105, 3GPP access networks 120, cellular base units 121, 3GPP communication links 123, non-3GPP access networks 130, access points 131, non-3GPP communication links 133, and mobile core networks 140 are depicted in Figure 1, one of skill in the art will recognize that any number of remote units 105, 3GPP access networks 120, cellular base units 121, 3GPP communication links 123, non-3GPP access networks 130, access points 131, non-3GPP communication links 133, and mobile core networks 140 may be included in the wireless communication system 100.

In one implementation, the 3GPP access network 120 is compliant with the Fifth-Generation ("5G") system specified in the Third Generation Partnership Project ("3GPP") specifications. In another implementation, the 3GPP access network 120 is compliant with the LTE system specified in the 3GPP specifications. For example, the 3GPP access network 120 may comprise a New Generation Radio Access Network ("NG-RAN"), implementing New Radio ("NR") Radio Access Technology ("RAT") and/or Long-Term Evolution ("LTE") RAT. Moreover, the non-3GPP access network 130 may comprise a non-3GPP RAT (e.g., Wi-Fi^{®} or Institute of Electrical and Electronics Engineers ("IEEE") 802.11-family compliant WLAN).

More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like.

Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the cellular base units 121 in the 3GPP access network 120 via uplink ("UL") and downlink ("DL") communication signals. The UL and DL communication signals may be carried over the 3GPP communication links 123. Furthermore, the UL communication signals may comprise one or more uplink channels, such as the Physical Uplink Control Channel ("PUCCH") and/or Physical Uplink Shared Channel ("PUSCH"), while the DL communication signals may comprise one or more downlink channels, such as the Physical Downlink Control Channel ("PDCCH") and/or Physical Downlink Shared Channel ("PDSCH"). Similarly, the remote units 105 may communicate with one or more access points 131 in the non-3GPP access network(s) 130 via UL and DL communication signals carried over the non-3GPP communication links 133. Here, the access networks 120 and 130 are intermediate networks that provide the remote units 105 with access to the mobile core network 140.

In some embodiments, the remote units 105 communicate with a remote host 155 (e.g., an application server) in the packet data network 150 via a network connection with the mobile core network 140. For example, an application (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via an access network in the 5G-RAN 115 (i.e., the 3GPP access network 120 and/or the non-3GPP access network 130). The mobile core network 140 then relays traffic between the remote unit 105 and the remote host 155 using the PDU session. The PDU session represents a logical connection between the remote unit 105 and the User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

As used herein, Protocol Data Units ("PDUs") refer to packets exchanged between peer entities in the same layer (e.g., of a protocol stack). In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a PDN Gateway ("PGW," not shown) in the mobile core network 140. In certain embodiments, there is a one-to-one mapping between an EPS Bearer and a QoS profile, such that all packets belonging to a specific EPS Bearer have the same QoS Class Identifier ("QCI").

Moreover, the remote unit 105 may establish a multiaccess PDU session (i.e., multiaccess data connection) with the mobile core network 140. In addition, the remote unit 105 may establish several multipath QUIC connections via the multiaccess PDU session, such as the multipath QUIC connection 148. Each multipath QUIC connection is composed of one or more paths, each path using a different access network. For example, the multipath QUIC connection 148 is composed of a first path 125, using a 3GPP access network 120, and a second path 135, using a non-3GPP access network 130. Traffic sent via the multipath QUIC connection 148 is steered over one or both of the paths 125, 135, according to steering rules. The remote unit 105 may be configured with a steering policy and QoS policy, which is applied to direct traffic to one of the several multipath QUIC connections of the multiaccess PDU session. Additionally, Access Traffic Steering, Switching and Splitting ("ATSSS") functionality is implemented in the remote unit 105 and UPF 141 to support data traffic transmission using multipath QUIC transport and policy-based steering of the data traffic across the different access networks (such as the non-3GPP access network 130 and the 3GPP access network 120).

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the 3GPP access network 120, that may include one or more controllers communicably coupled to one or more corresponding base units 121. These and other elements of radio access network are not illustrated but are well known generally by those having ordinary skill in the art. The base units 121 connect to the mobile core network 140 via the 3GPP access network 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121.

Note that during NR operation on unlicensed spectrum (referred to as "NR-U"), the base unit 121 and the remote unit 105 communicate over unlicensed (i.e., shared) radio spectrum. Similarly, during LTE operation on unlicensed spectrum (referred to as "LTE-U"), the base unit 121 and the remote unit 105 also communicate over unlicensed (i.e., shared) radio spectrum.

The non-3GPP access networks 130 may be distributed over a geographic region. Each non-3GPP access network 130 may serve a number of remote units 105 with a serving area. An access point 131 in a non-3GPP access network 130 may communicate directly with one or more remote units 105 by receiving UL communication signals and transmitting DL communication signals to serve the remote units 105 in the time, frequency, and/or spatial domain. Both DL and UL communication signals are carried over the non-3GPP communication links 133. The 3GPP communication links 123 and non-3GPP communication links 133 may employ different frequencies and/or different communication protocols. In various embodiments, an access point 131 may communicate using unlicensed radio spectrum. The mobile core network 140 may provide services to a remote unit 105 via the non-3GPP access networks 130, as described in greater detail herein.

In some embodiments, a non-3GPP access network 130 connects to the mobile core network 140 via an interworking function 137. The interworking function 137 provides interworking between the remote unit 105 and the mobile core network 140. In some embodiments, the interworking function 137 is a Non-3GPP Interworking Function ("N3IWF") and, in other embodiments, it is a Trusted Non-3GPP Gateway Function ("TNGF"). The N3IWF supports the connection of "untrusted" non-3GPP access networks to the mobile core network (e.g., 5GC), whereas the TNGF supports the connection of "trusted" non-3GPP access networks to the mobile core network. The interworking function 137 supports connectivity to the mobile core network 140 via the "N2" and "N3" interfaces, and it relays "N1" signaling between the remote unit 105 and the AMF 143. Both the 3GPP access network 120 and the interworking function 137 communicate with the AMF 143 using a "N2" interface. The interworking function 137 also communicates with the UPF 141 using a "N3" interface.

In certain embodiments, a non-3GPP access network 130 may be controlled by an operator of the mobile core network 140 and may have direct access to the mobile core network 140. Such a non-3GPP AN deployment is referred to as a "trusted non-3GPP access network." A non-3GPP access network 130 is considered as "trusted" when it is operated by the 3GPP operator, or a trusted partner, and supports certain security features, such as strong air-interface encryption. In contrast, a non-3GPP AN deployment that is not controlled by an operator (or trusted partner) of the mobile core network 140, does not have direct access to the mobile core network 140, or does not support the certain security features is referred to as a "non-trusted" non-3GPP access network.

In one embodiment, the mobile core network 140 is a 5G Core network ("5GC") or an Evolved Packet Core ("EPC"), which may be coupled to a packet data network 150, like the Internet and private data networks, among other data networks. A remote unit 105 may have a subscription or other account with the mobile core network 140. In various embodiments, each mobile core network 140 belongs to a single mobile network operator ("MNO") and/or Public Land Mobile Network ("PLMN"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the 5G-RAN 115, a Session Management Function ("SMF") 145, a Policy Control Function ("PCF") 147, a Unified Data Management function ("UDM") and a User Data Repository ("UDR"). In some embodiments, the UDM is co-located with the UDR, depicted as combined entity "UDM/UDR" 149. Although specific numbers and types of network functions are depicted in Figure 1, one of skill in the art will recognize that any number and type of network functions may be included in the mobile core network 140.

The UPF(s) 141 is/are responsible for packet routing and forwarding, packet inspection, QoS handling, and external PDU session for interconnecting Data Network ("DN"), in the 5G architecture. The AMF 143 is responsible for termination of Non-Access Spectrum ("NAS") signaling, NAS ciphering and integrity protection, registration management, connection management, mobility management, access authentication and authorization, security context management. The SMF 145 is responsible for session management (i.e., session establishment, modification, release), remote unit (i.e., UE) Internet Protocol ("IP") address allocation and management, DL data notification, and traffic steering configuration of the UPF 141 for proper traffic routing.

The PCF 147 is responsible for unified policy framework, providing policy rules to CP functions, access subscription information for policy decisions in UDR. The UDM is responsible for generation of Authentication and Key Agreement ("AKA") credentials, user identification handling, access authorization, subscription management. The UDR is a repository of subscriber information and may be used to service a number of network functions. For example, the UDR may store subscription data, policy-related data, subscriber-related data that is permitted to be exposed to third party applications, and the like.

In various embodiments, the mobile core network 140 may also include a Network Repository Function ("NRF") (which provides Network Function ("NF") service registration and discovery, enabling NFs to identify appropriate services in one another and communicate with each other over Application Programming Interfaces ("APIs")), a Network Exposure Function ("NEF") (which is responsible for making network data and resources easily accessible to customers and network partners), an Authentication Server Function ("AUSF"), or other NFs defined for the 5GC. When present, the AUSF may act as an authentication server and/or authentication proxy, thereby allowing the AMF 143 to authenticate a remote unit 105. In certain embodiments, the mobile core network 140 may include an authentication, authorization, and accounting ("AAA") server. In some embodiments, the mobile core network 140 may include a Performance Measurement Functionality ("PMF") (not shown) to assist the remote unit 105 and/or the UPF 141 in taking performance measurements over the two accesses, including latency measurements. In one embodiment, the PMF may be co-located with the UPF 141.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. For example, one or more network slices may be optimized for enhanced mobile broadband ("eMBB") service. As another example, one or more network slices may be optimized for ultra-reliable low-latency communication ("URLLC") service. In other examples, a network slice may be optimized for machine-type communication ("MTC") service, massive MTC ("mMTC") service, Internet-of-Things ("IoT") service. In yet other examples, a network slice may be deployed for a specific application service, a vertical service, a specific use case, etc.

A network slice instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 145 and UPF 141. In some embodiments, the different network slices may share some common network functions, such as the AMF 143. The different network slices are not shown in Figure 1 for ease of illustration, but their support is assumed.

While Figure 1 depicts components of a 5G RAN and a 5G core network, the described embodiments for multipath QUIC for ATSSS using stream-aware steering mode apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 145 may be mapped to a control plane portion of a PGW and/or to an MME, the UPF 141 may be mapped to an SGW and a user plane portion of the PGW, the UDM/UDR 149 may be mapped to an HSS, etc.

In the following descriptions, the term "gNB" is used for the base station/ base unit, but it is replaceable by any other radio access node, e.g., RAN node, ng-eNB, eNB, Base Station ("BS"), Access Point ("AP"), NR BS, 5G NB, Transmission and Reception Point ("TRP"), etc. Additionally, the term "UE" is used for the mobile station/ remote unit, but it is replaceable by any other remote device, e.g., remote unit, MS, ME, etc. Further, the operations are described mainly in the context of 5G NR. However, the below described solutions/methods are also equally applicable to other mobile communication systems for multipath QUIC for ATSSS using stream-aware steering mode.

In various embodiments, the remote unit 105 (i.e., UE) communicates with a Remote Host 155 via a multiaccess PDU Session supporting a plurality of multipath QUIC connections, whereby each multipath QUIC connection supports data transmission over several paths, such as a first path 125 using 3GPP access network 120 and over a second path 135 using non-3GPP access network 130. The remote unit 105 directs uplink traffic over one or more paths according to a steering policy.

New ATSSS functionality is implemented in the UE and UPF, namely, the MPQUIC steering functionality, which supports data traffic transmission using multipath QUIC transport and policy-based steering of the data traffic across the different access networks (such as the non-3GPP access network 130 and the 3GPP access network 120). Note that the first and second access paths 125, 135 support one or more multipath QUIC connections 148 and have a common anchor in the UPF 141.

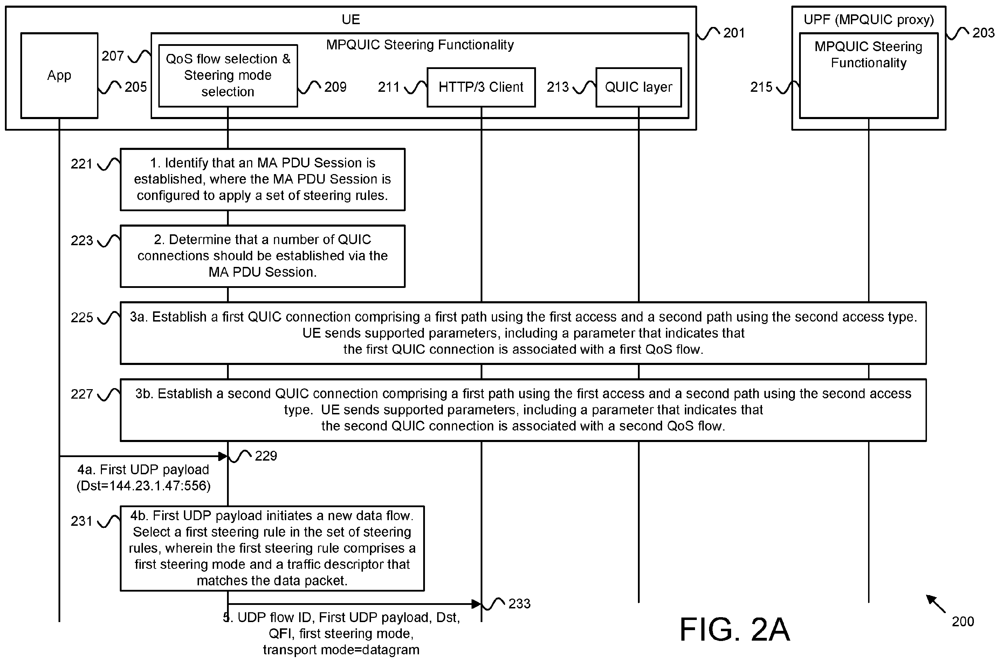

Figures 2A-2C depict a procedure 200 for exchanging data traffic between a UE 201 and a UPF 203 using the MPQUIC steering functionality, according to embodiments of the disclosure. The procedure 200 involves the UE 201 (e.g., an embodiment of the remote unit 105) and the UPF 203 (e.g., an embodiment of the UPF 141). In the depicted embodiment, the UE 201 includes an application 205 (denoted as "App") and a MPQUIC Steering Functionality 207. Here, the MPQUIC Steering Functionality 207 contains a QoS Flow selection and Steering Mode selection function 209, an HTTP/3 client 211, and a QUIC layer entity 213. The UPF 203 (e.g., a MPQUIC proxy) also contains a MPQUIC steering functionality 215. Note that the UPF 203 may also contain an HTTP/3 proxy (not depicted) that communicates with the HTTP/3 client 211 in the UE 201.

Note that Figures 2A-2C illustrates several functional elements inside the UE 201 (e.g., the app 205, the HTTP/3 client 211, the QUIC layer 213, etc.), and maps steps to particular functional elements. However, this mapping of steps to functional elements is only used to better understand how the method could be implemented in a UE. Accordingly, it should be clear that the procedure 200 can be implemented in a UE in a different way and the present disclosure is not to be limited to the specific implementation depicted in Figure 2A-2C. Thus, every step of the procedure 200 may be executed by the UE 201 (as a whole) using different functional elements and/or different mapping of steps to functional elements.

Starting on Figure 2A, the procedure 200 begins at Step 1 when the UE 201 establishes a MA PDU Session with the 5G core ("5GC") network, i.e., containing the UPF 203 (see block 221). During the MA PDU Session establishment, the following sub-steps are performed:
A) In the PDU Establishment Request message, the UE 201 indicates that it supports the MPQUIC steering functionality. This indication can be used by the 5GC (a) to select a UPF 203 that also supports the MPQUIC steering functionality and (b) to decide whether the ATSSS/N4 rules for the MA PDU Session may use the MPQUIC steering functionality. Note that the UE 201 is configured with ATSSS rules for steering/routing uplink traffic to the UPF 203, while the UPF 203 is configured with corresponding N4 rules for steering/routing downlink traffic to the UE 201.
B) The UE 201 receives MPQUIC proxy information, i.e., one IP address of the UPF 203, one UDP port number, and the proxy type (e.g., "masque" or "connect-udp"). This MPQUIC proxy information is used by the UE 201 for establishing QUIC connections with the UPF 203, which operates as an MPQUIC proxy.
C) The UE 201 receives one IP address/prefix for the MA PDU Session and two additional IP addresses/prefixes, called "link-specific multipath QUIC" addresses; one associated with the 3GPP access and another associated with the non-3GPP access. These two additional addresses can be used by the UE 201 to create two paths in a multipath QUIC connection.
D) The UE 201 receives QoS rules and ATSSS rules (also referred to as steering rules) to be applied for this MA PDU Session. The QoS rules indicate how the traffic of the MA PDU Session should be mapped to the different QoS flows of the MA PDU Session, each QoS flow applying different QoS handling. The ATSSS rules indicate how the traffic of the MA PDU Session should be routed across the different access types of the MA PDU Session.

An example ATSSS rule using the MPQUIC steering functionality is shown below:

| | |
|---|---|
| • | Rule identifier |
| • | Rule precedence |
| • | Traffic Descriptor |
| ∘ | Application id: com.example.appl |
| ∘ | Protocol id: UDP |
| • | Access Selection Descriptor |
| ∘ | Steering Mode: Load balancing (split percentages = 50/50) |
| ∘ | Steering Functionality: MPQUIC |
| ∘ | Threshold Values: Max RTT = 80ms |

The Traffic Descriptor component indicates the traffic that matches this rule (namely, the UDP traffic of application "com.example.app1"). The Access Selection Descriptor indicates how the traffic matching this rule should be routed across the different access types (namely, using the MPQUIC steering functionality and 50/50 load balancing on both accesses, assuming the RTT over each access does not exceed 80ms).

At Step 2, after the MA PDU Session is established and the UE 201 identifies that one or more ATSSS rules required traffic steering using the MPQUIC steering functionality, the UE 201 determines the number of multipath QUIC connections to be established with the UPF 203 (i.e., the MPQUIC proxy) (see block 223). For example, the UE 201 may determine to establish as many multipath QUIC connections, as the number of QoS flows for the MA PDU Session, i.e., sending the traffic that should experience the same QoS handing over a single multipath QUIC connection.

At Step 3, the UE 201 establishes the number of multipath QUIC connection with the UPF 203 (MPQUIC proxy) determined in the previous step. This results into several multipath QUIC connections between the UE 201 and the UPF 203. In the depicted embodiment, the UE 201 establishes at least two multipath QUIC connections.

At Step 3a, the UE 201 establishes a first multipath QUIC connection that comprises a first path using the first access network (e.g., the 3GPP access) and a second path using the second access network (e.g., the non-3GPP access) (see block 225).

At Step 3b, the UE 201 establishes a second multipath QUIC connection that comprises a first path using the first access network (e.g., the 3GPP access) and a second path using the second access network (e.g., the non-3GPP access) (see block 227).

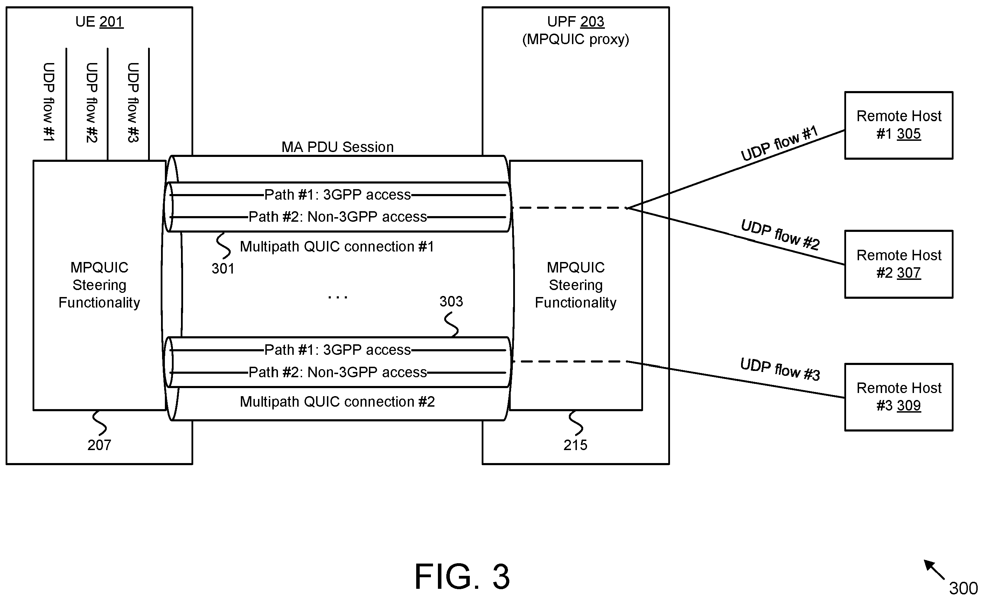

Figure 3 depicts an exemplary set 300 of multipath QUIC connections in a MA PDU session between the UE 201 and the UPF 203, according to embodiments of the disclosure. As discussed above, during Step 3 of Figure 2A, the UE 201 establishes a first multipath QUIC connection 301 and a second multipath QUIC connection 303. Each of these connections is composed of a first path using a first access type (e.g., 3GPP access) and a second path using a second access type (e.g., non-3GPP access). More paths are also possible.

In the depicted embodiment, the UE 201 handles traffic for three different data flow, referred to as UDP flows (denoted "UDP Flow #1," "UDP Flow #2," and "UDP Flow #3"). The UDP Flow #1 and UDP Flow #2 are routed via the first multipath QUIC connection 301 and the UDP Flow #3 is routed via the second multipath QUIC connection 303. At the UPF 203, uplink traffic of the UDP Flow #1 is forwarded to a first remote host 305, uplink traffic of the UDP Flow #2 is forwarded to a second remote host 307, and uplink traffic of the UDP Flow #3 is forwarded to a third remote host 309.

Returning to Figure 2A, for each multipath QUIC connection, the QoS flow associated with this connection is negotiated between the UE 201 and the UPF 203. In certain embodiments, this is achieved by using a new HTTP/3 SETTINGS parameter (existing HTTP/3 SETTINGS parameters are defined in IETF draft-ietf-quic-http-34, which reference is hereby incorporated by reference). In other embodiments, the QoS flow is negotiated by using a new QUIC transport parameter (e.g., different from existing QUIC transport parameters defined in IETF RFC 9000).

At Step 4, the UE 201 detects a new data packet (referred to as "first UDP payload") that should be sent via the MA PDU Session. In the depicted embodiment, the App 205 generates the new data packet (see signaling 229) and the QoS Flow selection & Steering mode selection function 209 identifies a first ATSSS rule that matches this data packet (see block 231). The first ATSSS rule includes in the Access Selection Descriptor component the steering functionality (e.g., MPQUIC) and the steering mode (e.g., load-balancing, redundant, smallest-delay, etc.) that should be used for the data packet.

At Step 5, the UE 201 determines that the first UDP payload initiates a new UDP flow (or data flow), i.e., it is the first data packet of a sequence of data packets going to the same IP destination address (e.g., '144.23.1.47') and UDP destination port (e.g., '556'). For the new UDP flow (and for each new UDP flow):
- The UE 201 selects a first steering mode, i.e., the steering mode in the first ATSSS rule.
- The UE 201 selects a first transport mode, e.g., a stream transport mode or a datagram transport mode. The stream transport mode is selected when the packets of the UDP flow should be received reliably, e.g., in-sequence and without duplications. Otherwise, the datagram transport mode is selected.
- The UE 201 selects a first QoS flow identifier (QFI), i.e., the QoS flow over which the UDP flow should be transmitted. This is selected by using the received QoS rules.

In the embodiment shown in Figure 2A, these selections are performed by the QoS Flow selection & Steering mode selection function 209. In the depicted example, the datagram transport mode is selected, e.g., using the value "transport mode=datagram" Note that the datagram transport mode may be selected based on the steering mode associated with the data packet (i.e., Active-Standby steering mode) and/or may be selected based on the preferences of App 205. The QoS Flow selection & Steering mode selection function 209 transfers the first UDP payload to the HTTP/3 client 211 and indicates the UDP flow ID, the destination (e.g., IP address '144.23.1.47'), the selected QFI, the selected steering mode, and the selected transport mode (see messaging 233). The HTTP/3 client 211 uses this information to create a "context" for this UDP flow, i.e., information indicating how all data packets of the UDP flow should be handled.

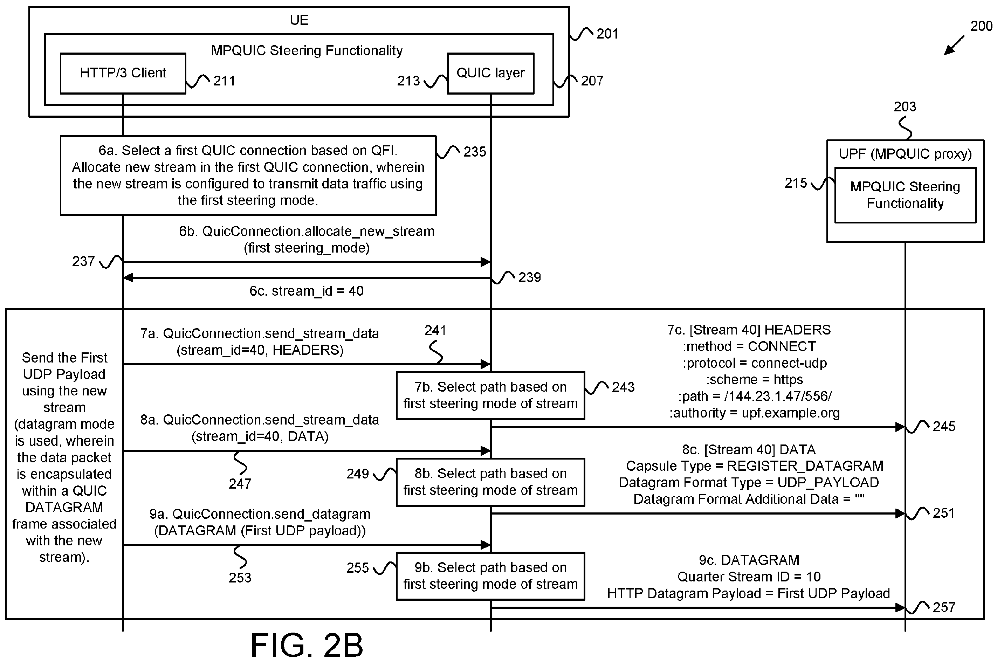

Continuing on Figure 2B, at Step 6 the UE 201 selects a first multipath QUIC connection to be used for the new UDP flow (based on the selected first QFI) and the UE allocates a new stream (e.g., stream 40) in the first multipath QUIC connection (recall that each QUIC connection supports multiple streams). This new stream is associated with the new UDP flow initiated by the first UDP payload. In addition, the UE configures the new stream to transmit data traffic using the first steering mode, i.e., the steering mode that should be applied for this UDP flow according to the matching (first) ATSSS rule.

In the example implementation, at Step 6a, the HTTP/3 client 211 selects the first QUIC connection based on QFI (see block 235). At Step 6b, the HTTP/3 client 211 requests that the QUIC layer 213 allocate of a new QUIC stream (see signaling 237). At Step 6c, the QUIC layer 213 allocates the new stream and indicates the stream ID of the new stream to the HTTP/3 client 211 (see signaling 239).

At Steps 7-9, the UE 201 sends the data packet (first UDP payload) using the allocated new stream. When the datagram mode for this data packet is selected, the UE 201 encapsulates the data packet within a QUIC DATAGRAM frame and applies the procedures specified in draft-ietf-masque-connect-udp ("UDP Proxying Support for HTTP") to proxy this frame via the MPQUIC proxy (i.e., the UPF 203). When the stream mode for this data packet is selected, the UE 201 encapsulates the data packet within a QUIC STREAM frame and applies the procedures specified in IETF RFC 9000 to proxy this frame via the MPQUIC proxy (i.e., UPF 203). IETF RFC 9000 ("QUIC: A UDP-Based Multiplexed and Secure Transport") is herein incorporated by reference.

In the example implementation of Figure 2B, at Steps 7a-7c, when the datagram mode is selected, the UE 201 sends first an HTTP HEADERS frame over the allocated stream 40, which informs the MPQUIC proxy (i.e., UPF 203) of the IP destination address (e.g., '144.23.1.47') and UDP destination port (e.g., '556') associated with the UDP flow. At Step 7a, the HTTP/3 client 211 sends the HTTP HEADERS frame to the QUIC layer 213 (see signaling 241). At Step 7b, the QUIC layer 213 selects the path (i.e., access) based on the first steering mode of the Stream 40 (see block 243). At Step 7c, the QUIC layer 213 sends the HTTP HEADERS frame to the UPF 203 (see messaging 245).

In turn, at Steps 8a-8c, the UE 201 sends an HTTP DATA frame, which indicates to MPQUIC proxy (i.e., UPF 203) that data packets will be encapsulated into QUIC datagrams using the "UDP_PAYLOAD" format. At Step 8a, the HTTP/3 client 211 sends the HTTP DATA frame to the QUIC layer 213 (see signaling 247). At Step 8b, the QUIC layer 213 selects the path (i.e., access) based on the first steering mode of the Stream 40 (see block 249). At Step 8c, the QUIC layer 213 sends the HTTP DATA frame to the UPF 203 (see messaging 251). Based on the received messaging 245 and 251, the MPQUIC proxy (i.e., UPF 203) creates a "context" for Stream 40, which includes information such as an IP destination address, a UDP destination port, etc. Using this context, the MPQUIC proxy (i.e., UPF 203) determines how to forward all received uplink UDP payloads associated with Stream 40. The MPQUIC proxy (i.e., UPF 203) stores also additional information in this context, used for downlink UDP payloads, such as, a steering mode and a transport mode. The MPQUIC proxy (i.e., UPF 203) determines the steering mode and the transport mode associated with a QUIC stream using its own steering rules and QoS rules.

At Steps 9a-9c, finally, the UE 201 sends a QUIC DATAGRAM frame to MPQUIC proxy (UPF) that encapsulates the first UDP payload. At Step 9a, the HTTP/3 client 211 sends the first UDP payload to the QUIC layer 213 (see signaling 253). At Step 9b, the QUIC layer 213 selects the path (i.e., access) based on the first steering mode of the Stream 40 (see block 255). At Step 9c, the QUIC layer 213 sends the first UDP payload to the UPF 203 (see messaging 257).

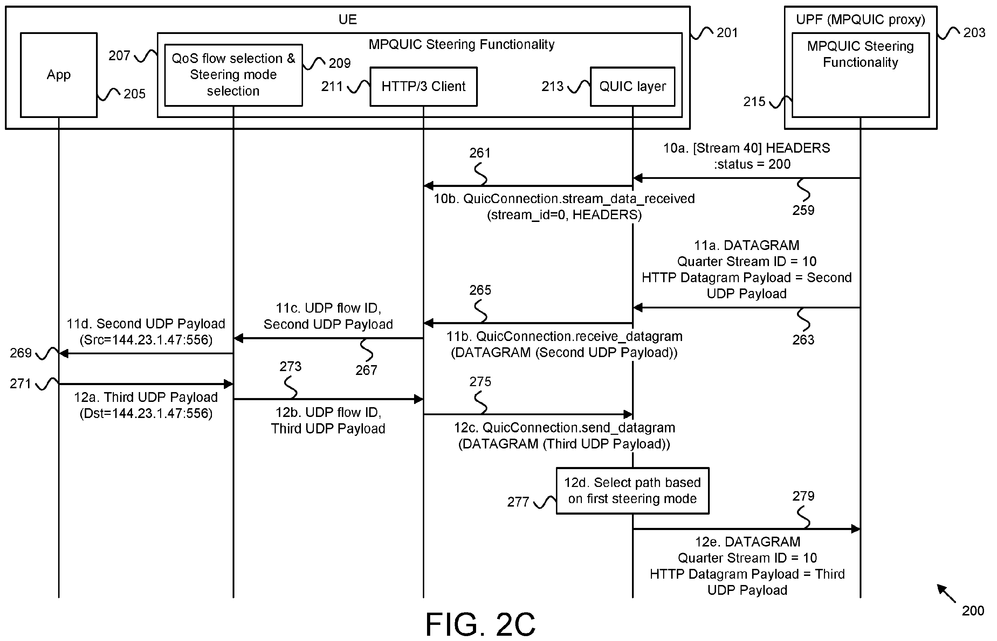

Continuing on Figure 2C, at Step 10 the MPQUIC proxy (i.e., UPF 203) responds with an HTTP HEADERS frame containing a 200 status, indicating that the request to proxy data packets to a remote host with IP destination address '144.23.1.47' and UDP destination port '556' is accepted. In the example implementation, at Step 10a, the HTTP HEADERS frame is received at the QUIC layer 213 and at Step 10b, the QUIC layer 213 indicates the status to the HTTP/3 client 211, e.g., using a *QuicConnection.stream_data_received* message (see messaging 261).

At Step 11, when a second UDP payload is received by the MPQUIC proxy from the remote host, the second UDP payload is transported to the UE 201 using the negotiated context information for the UDP flow, i.e., using the selected multipath QUIC connection, the selected stream on this connection, the selected transport mode, and the selected steering mode. All this context information is stored in the UPF 203 and in the UE 201 and is applied for all the data packets of the UDP flow.

In the example implementation, at Step 11a, the UPF 203 sends the second UDP payload encapsulated into a QUIC DATAGRAM frame that is associated with the stream 40 (i.e., Quarter stream ID × 4 = 40). The QUIC DATAGRAM frame is received at the QUIC layer 213 (see messaging 263). At Step 11b, the QUIC layer 213 forwards the second UDP payload to the HTTP/3 client 211, e.g., using a *QuicConnection.receive_datagram* message (see messaging 265). At Step 11c, the HTTP/3 client 211 forwards the second UDP payload to the QoS Flow selection & Steering mode selection function 209 (see messaging 267). At Step 11d, the QoS Flow selection & Steering mode selection function 209 forwards the second UDP payload to the App 205 (see messaging 269).

At Step 12, when a third UDP payload is received by the UE 201 from the App 205, the third UDP payload is transported to the MPQUIC proxy (i.e., at the UPF 203) using again all the negotiated context information for the UDP flow. Hence, the third UDP payload is encapsulated into a QUIC DATAGRAM frame that is associated with the stream 40 (i.e., Quarter stream ID × 4 = 40).

In the example implementation, at Step 12a, the QoS Flow selection & Steering mode selection function 209 receives the third UDP payload from the App 205 (see messaging 271). At Step 11b, the QoS Flow selection & Steering mode selection function 209 forwards the third UDP payload to the HTTP/3 client 211 (see messaging 273). At Step 11c, the HTTP/3 client 211 forwards the third UDP payload to the QUIC layer 213, e.g., using a *QuicConnection.receive_datagram* message (see messaging 275).

At Step 12d, the QUIC layer 213 selects the path (i.e., access) based on the first steering mode (see block 277). At Step 12e, the QUIC layer 213 sends the third UDP payload to the UPF 203 (see messaging 279). The third payload is encapsulated into a QUIC DATAGRAM frame that is associated with the Quarter stream 10.

Note that the context information for a UDP flow in the UE 201 and in the UPF 203 is created when the first UDP payload (i.e., the first data packet) of the UDP flow is detected. All subsequent UDP payloads of the same UDP flow are transported between the UE 201 and the UPF 203 using the created context information.

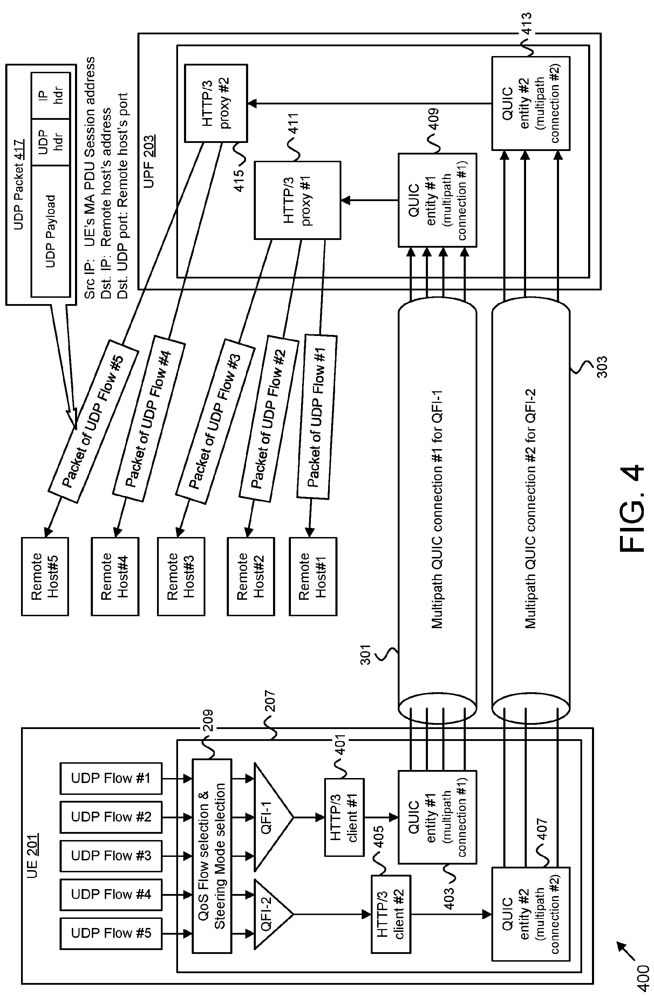

Figure 4 depicts user-plane operation 400 on multipath QUIC connections in a MA PDU Session, according to embodiments of the disclosure. Figure 4 illustrates how data packets (referred to as "UDP payloads") are transported from the UE 201 to the UPF 203 using the MPQUIC steering functionality 207, 215. Similar operation applies in the opposite direction, i.e., from the UPF 203 to the UE 201.

Figure 4 depicts five (5) different UDP flows. Each UDP flow is composed of multiple UDP payloads that go to the same IP destination address and UDP destination port (in a remote host). While five (5) different remote hosts are shown, one or more of the depicted remote hosts may comprises the same physical device (e.g., server correspondent device) but distinguished by a different combination of IP address and destination port. Here, the remote hosts are denoted remote host #1, remote host #2, remote host #3, remote host #4, and remote host #5.

At the UE 201, there are five (5) different UDP flows generated from at least one application. Here, the UDP flows are denoted UDP Flow #1, UDP Flow #2, UDP Flow #3, UDP Flow #4, and UDP Flow #5. In the depicted example, the UE 201 includes a QoS Flow selection & Steering mode selection function 209 that maps each UDP flow to a QoS flow identity ("QFI"). In certain embodiments, a different HTTP/3 client 211 is associated with each QFI. Similarly, a different QUIC layer entity 213 may be associated with each QFI. Note that the traffic routed to a multipath QUIC connection is the traffic mapped to the same QFI, i.e., all traffic that should experience the same QoS handling.

In the depicted embodiment, at the UE 201, a first HTTP/3 client 401 and a first QUIC layer entity 403 are associated with the multipath QUIC connection #1 301, while a second HTTP/3 client 405 and a second QUIC layer entity 407 are associated with the multipath QUIC connection #2 303. As depicted, the UPF 203 includes a first QUIC layer entity 409 and a first HTTP/3 proxy 411 associated with the multipath QUIC connection #1 301 and also includes a second QUIC layer entity 413 and a second HTTP/3 proxy 415 associated with the multipath QUIC connection #2 303.

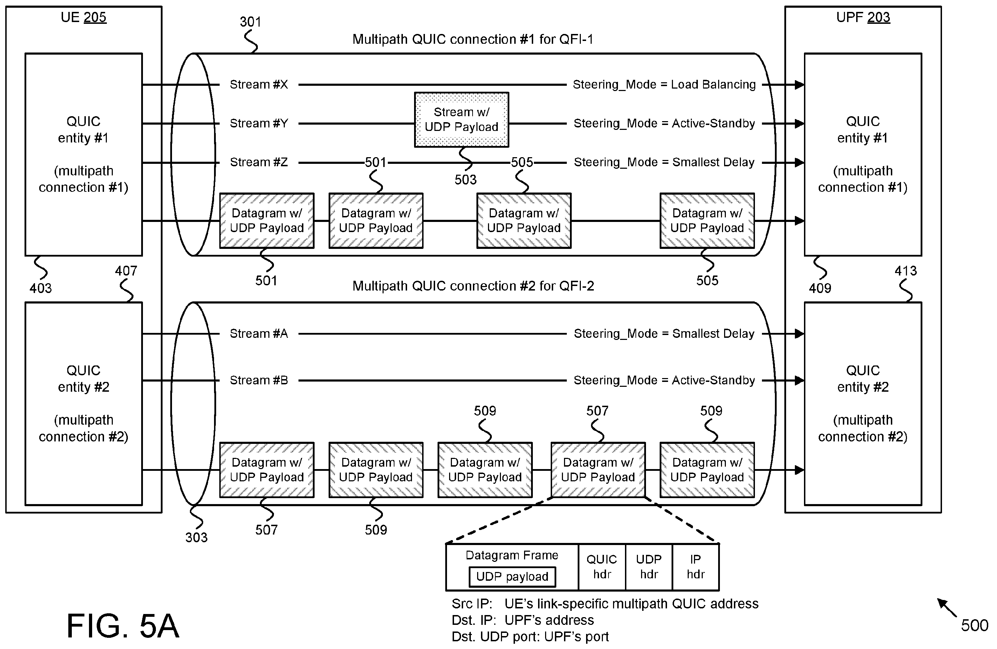

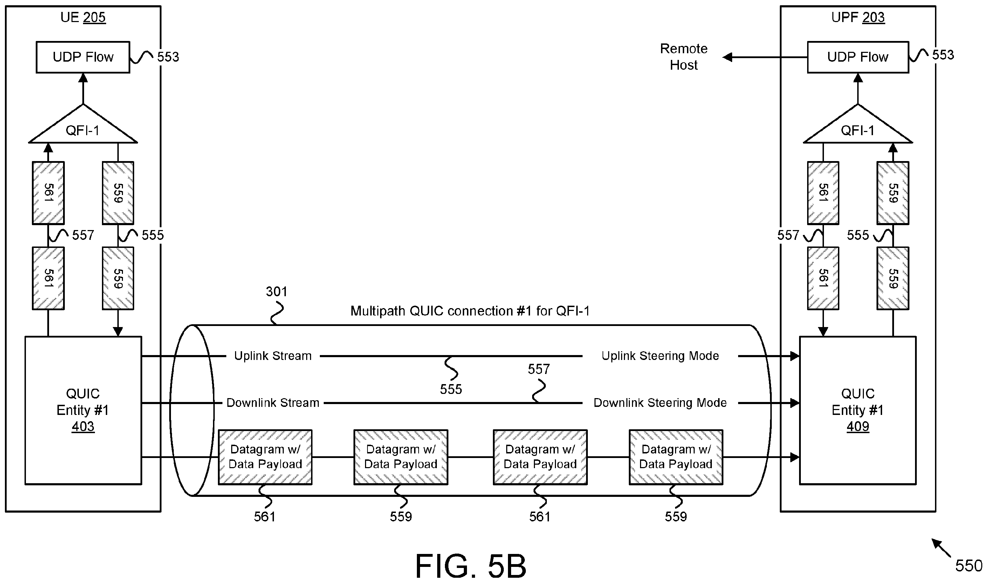

Each multipath QUIC connection has several streams, each one associated with a single UDP flow transported on this connection. As described in further detail below, a single UDP flow may be associated with both an uplink QUIC stream (e.g., created by the UE 201) and a downlink QUIC stream (e.g., created by the UPF 203). Each QUIC stream is also associated with a "context" in the UE 201 and in the UPF 203 that includes information used to decide how the uplink and the downlink traffic (i.e., UDP flow) related to this QUIC stream is to be handled. For example, the context includes a steering mode, a transport mode, an IP destination address, a UDP destination port, etc. Details of the multiple, multipath QUIC connections are described below with reference to Figures 5A and 5B.

The UPF 203 (operating as MPQUIC proxy) receives each UDP payload and forwards it to the final destination based on the context information stored in UPF for the associated UDP flow. In the depicted example, the first HTTP/3 proxy 411 forwards the UDP payloads of UDP Flow #1 to the remote host #1, forwards the UDP payloads of UDP Flow #2 to the remote host #2, and forwards the UDP payloads of UDP Flow #3 to the remote host #3. The second HTTP/3 proxy 415 forwards the UDP payloads of UDP Flow #4 to the remote host #4 and forwards the UDP payloads of UDP Flow #5 to the remote host #5.

Each UDP packet 417 contains an IP header, a UDP header and a corresponding UDP payload. The source IP address is set to the UE's MA PDU Session address, the destination IP address is set to the remote host's address, and the destination UDP port is set to the remote host's port.

Figures 5A and 5B depict details of user-plane operation for multipath QUIC connection, according to embodiments of the disclosure. Figure 5A depicts a detailed view 500 of the multipath QUIC connections during the user-plane operation of Figure 4. As discussed above, the UDP Flow #1, the UDP Flow #2 and the UDP Flow #3 are mapped to the multipath QUIC connection #1 301, while the UDP Flow #4 and the UDP Flow #5 are mapped to the multipath QUIC connection #2 303. Each multipath QUIC connection has several streams, each one associated with a single UDP flow transported on this connection. For example, the multipath QUIC connection #1 301 has three streams because three UDP flows are transported on this QUIC connection. In this example, the multipath QUIC connection #2 303 has two streams because only two UDP flows are transported on this QUIC connection. As described in further detail below, a single UDP flow may be associated with both an uplink QUIC stream (e.g., created by the UE 201) and a downlink QUIC stream (e.g., created by the UPF 203).

Each UDP flow is either using datagram transport mode or is using stream transport mode. In datagram transport mode, the UDP payloads are encapsulated into QUIC DATAGRAM frames sent outside the stream, but they are still associated with the stream via the quarter stream id in their headers. In stream transport mode, the UDP payloads are encapsulated into QUIC STREAM frames sent inside the stream.

In the depicted example, at the multipath QUIC connection #1 301 (for QFI-1) the UDP Flow #2 is sent using stream transport mode. Here, the UDP payload(s) of the UDP Flow #2 are encapsulated into QUIC STREAM frame(s) 503. However, the UDP Flows #1 and #3 are sent using datagram transport mode. Here, the UDP payloads of the UDP Flow #1 are encapsulated into QUIC DATAGRAM frames 501 and the UDP payloads of the UDP Flow #3 are encapsulated into QUIC DATAGRAM frames 505.

Note that the UDP Flow #1 is associated with QUIC Stream #X which is configured with steering mode "Smallest Delay." In the "Smallest Delay" steering mode, a given traffic flow is steered to whichever access network (i.e., path) has the smallest delay, e.g., with respect to Round Trip Time ("RTT").

The UDP Flow #2 is associated with QUIC Stream #Y which is configured with steering mode "Active-Standby." In the "Active-Standby" steering mode, for a given traffic flow, one of the access networks (3GPP or non-3GPP) is designated as "active" and the other as "standby." The "standby" access network will only be used for the traffic flow if the "active" access network is unavailable.

The UDP Flow #3 is associated with QUIC Stream #Z which is configured with steering mode "Load Balancing." In the "Load Balancing" steering mode, traffic of a given flow is to be split across both access networks, e.g., based on a percentage split.

At the multipath QUIC connection #2 303 (for QFI-2) the UDP Flows #4 and #5 are sent using datagram transport mode. Here, the UDP payloads of the UDP Flow #4 are encapsulated into QUIC DATAGRAM frames 507 and the UDP payloads of the UDP Flow #5 are encapsulated into QUIC DATAGRAM frames 509.

Note that the UDP Flow #4 is associated with the QUIC Stream #A which is configured with steering mode "Smallest Delay." The UDP Flow #5 is associated with the QUIC Stream #B which is configured with steering mode "Active-Standby."

Each QUIC packet contains at least one QUIC frame, e.g., DATAGRAM frame, encapsulating the UDP payload, a QUIC header, a UDP header and an IP header. The source IP address is set to the UE's link-specific multipath QUIC address, the destination IP address is set to the UPF's address, and the destination UDP port is set to the UPF's port.

Figure 5B is a detailed view 550 of uplink and downlink QUIC streams associated with a multipath QUIC connection. While the view 550 shows details of one multipath QUIC connection 551; however, the principles described herein are applicable to each of multiple multipath QUIC connections established between the UE 201 and the UPF 203.

In various embodiments, for a UDP flow 553 there can be two associated QUIC streams: one uplink QUIC stream 555 created by the UE 201 for the uplink traffic of the UDP flow, and one downlink QUIC stream 557 created by the UPF 203 for the downlink traffic of the UDP flow.

Figure 5B illustrates how the traffic of a UDP flow 553 is transferred between the UE 201 and the UPF 203 using QUIC datagram transport. In this figure, it is assumed that the uplink traffic and the downlink traffic of the UDP flow 553 are mapped to the same QoS flow (e.g., QFI-1). Therefore, both the uplink traffic and the downlink traffic of the UDP flow 553 use the same multipath QUIC connection 551.

The uplink QUIC stream 555 is established by the UE 201 to enable transmission of uplink data packets 559 and it is configured to apply an uplink steering mode, i.e., the steering mode determined based on the ATSSS rules in the UE 201.

The downlink QUIC stream 557 is established by the UPF 203 to enable transmission of downlink data packets 561 and it is configured to apply a downlink steering mode, i.e., the steering mode determined based on the N4 rules in the UPF 203. The data packets of the UDP flow 553 are transmitted in datagram mode, i.e., they are encapsulated in DATAGRAM frames, each one carrying header information (see the Quarter Stream ID defined in draft-ietf-masque-h3-datagram-07) that associates it with a QUIC stream.

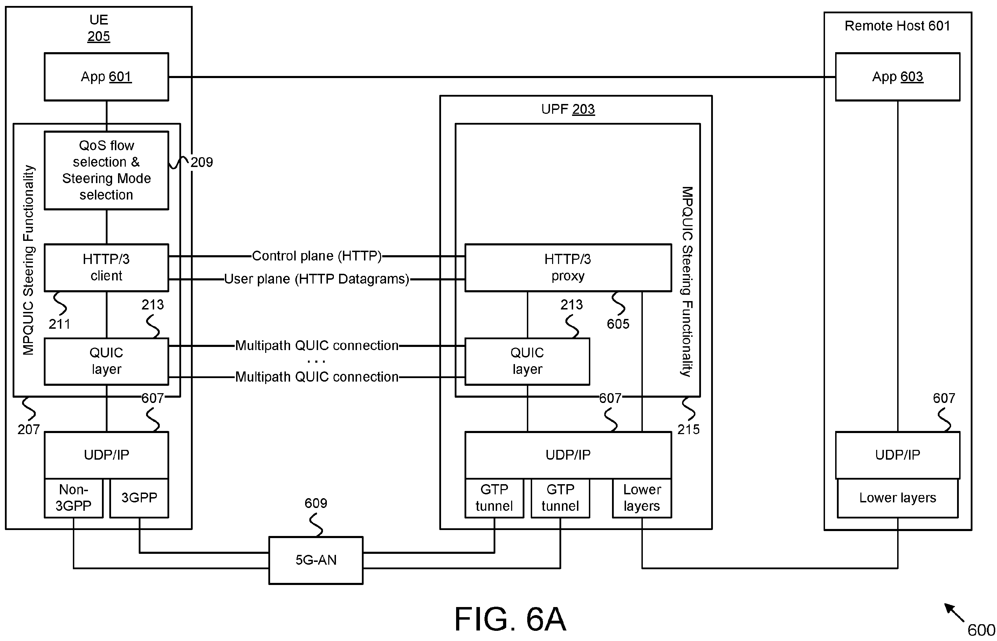

Figure 6A-6B show the protocol stack used by the MPQUIC steering functionality. Figure 6A depicts an exemplary protocol stack 600 used by MPQUIC steering functionality for uplink data transmission, according to embodiments of the disclosure. The protocol stack 600 maps various protocol layers at the UE 201, the UPF 203 and a Remote Host 601 (which may be one embodiment of the remote host 155). The UE 201 and Remote Host 601 each have an instance of the Application 603 at an application layer which is above the MPQUIC steering functionality.

As discussed above, the MPQUIC steering functionality 207 at the UE 201 may include a QoS Flow selection & Steering mode selection function 209, a HTTP/3 client 211, and a QUIC layer 213. The QoS Flow selection & Steering mode selection function 209 operates in the application layer between the application 603 and the HTTP layer.

At the HTTP layer, the HTTP/3 client 211 corresponds to an HTTP/3 proxy 605 in the UPF 203. In various embodiments, both the HTTP/3 client 211 and the HTTP/3 proxy 605 (i.e., server) support the HTTP extensions defined in IETF specifications "draft-ietf-masque-h3-datagram-07" and "draft-ietf-masque-connect-udp-08," which documents are incorporated herein by reference. Note that the HTTP/3 client 211 and the HTTP/3 proxy 605 communicate on the control plane using the HyperText Transfer Protocol ("HTTP") and communicate on the user plane using HTTP datagrams. The QUIC layer 213 operates below the HTTP layer and supports the QUIC connections described herein.

Below the MPQUIC steering functionality is the UDP/IP layer 607 and lower layers, e.g., Layer-3, Layer-2, and Layer-1. Note that at the UE 201 there may be separate protocol stacks for the 3GPP access network (e.g., containing Non-Access Stratum, Access Stratum, physical layers) and the non-3GPP access network (e.g., implementing IEEE 802.11 protocol at Layer-1 and Layer 2) for the connections via the 5G access network ("5G-AN") 609 (which may be one embodiment of the 5G-RAN 115).

Further, the UPF 203 includes a GPRS Tunneling Protocol ("GTP") tunnel where an IP packet containing the QUIC packet is received from the UE 201. The QUIC packet is decapsulated from the IP packet at UDP/IP layer and the IP packet is decapsulated from the QUIC packet at the QUIC protocol layer, after which it is delivered to the QUIC layer and its data (e.g., UDP payload) delivered to the upper layers (e.g., HTTP layer, App layer).

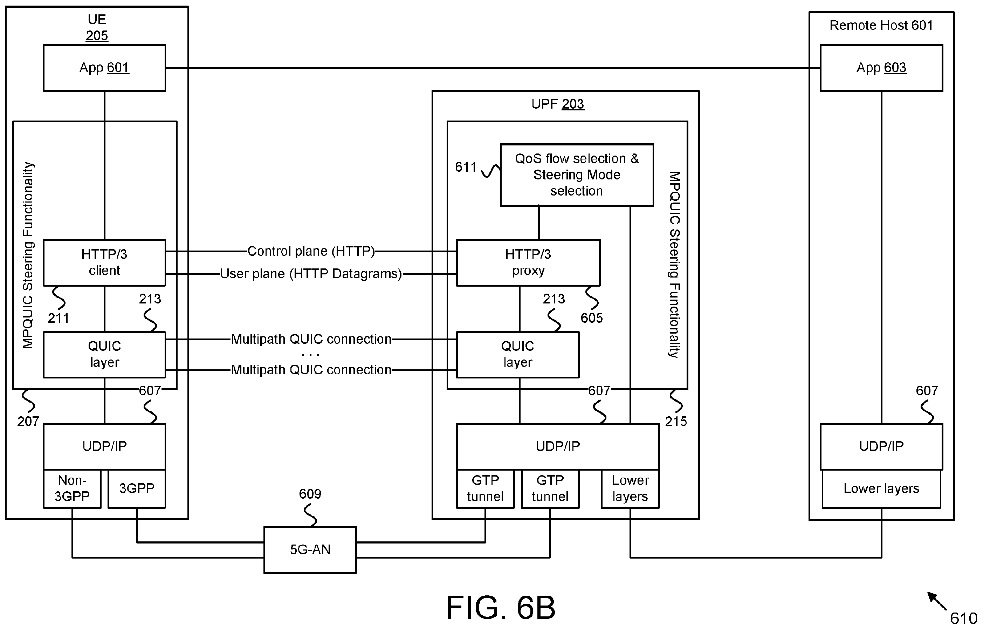

Figure 6B depicts an exemplary protocol stack 610 used by MPQUIC steering functionality for downlink data transmission, according to embodiments of the disclosure. The protocol stack 610 differs from the protocol stack 600 in that the UPF 203 includes an instance of a QoS Flow selection & Steering mode selection function 611 that operates in the application layer between the application 603 and the HTTP layer.

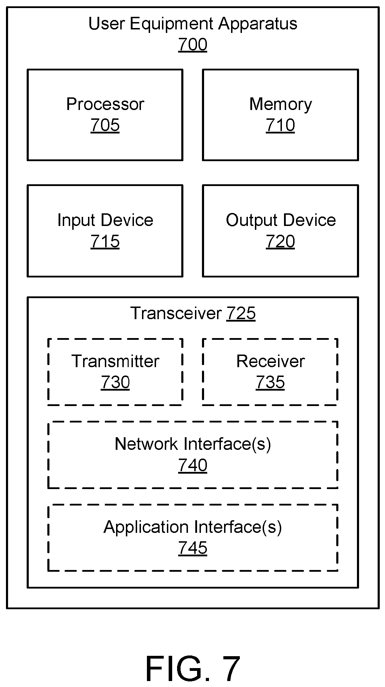

Figure 7 depicts one embodiment of a user equipment apparatus 700 that may be used for multipath QUIC for ATSSS using stream-aware steering mode, according to embodiments of the disclosure. The user equipment apparatus 700 may be one embodiment of the remote unit 105 and/or the UE 201. Furthermore, the user equipment apparatus 700 may include a processor 705, a memory 710, an input device 715, an output device 720, a transceiver 725.

In some embodiments, the input device 715 and the output device 720 are combined into a single device, such as a touchscreen. In certain embodiments, the user equipment apparatus 700 may not include any input device 715 and/or output device 720. In various embodiments, the user equipment apparatus 700 may include one or more of: the processor 705, the memory 710, and the transceiver 725, and may not include the input device 715 and/or the output device 720.

As depicted, the transceiver 725 includes at least one transmitter 730 and at least one receiver 735. In some embodiments, the transceiver 725 communicates with one or more cells (or wireless coverage areas) supported by one or more satellites 113, terrestrial base units 131, and/or access points 141. In various embodiments, the transceiver 725 is operable on unlicensed spectrum. Moreover, the transceiver 725 may include multiple UE panels supporting one or more beams. Additionally, the transceiver 725 may support at least one network interface 740 and/or application interface 745. The application interface(s) 745 may support one or more APIs. The network interface(s) 740 may support 3GPP reference points, such as Uu, N1, PC5, etc. Other network interfaces 740 may be supported, as understood by one of ordinary skill in the art.

The processor 705, in one embodiment, may include any known controller capable of executing computer-readable instructions and/or capable of performing logical operations. For example, the processor 705 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 705 executes instructions stored in the memory 710 to perform the methods and routines described herein. The processor 705 is communicatively coupled to the memory 710, the input device 715, the output device 720, and the transceiver 725.

In various embodiments, the processor 705 controls the user equipment apparatus 700 to implement the above described UE behaviors. In certain embodiments, the processor 705 may include an application processor (also known as "main processor") which manages application-domain and operating system ("OS") functions and a baseband processor (also known as "baseband radio processor") which manages radio functions.

In some embodiments, the transceiver 725 comprises a first transceiver and a second transceiver (i.e., each transceiver implementing a network interface 740). Using the first transceiver, the apparatus 700 communicates with a mobile communication network via a first access network. Using the second transceiver, the apparatus 700 communicates with the mobile communication network via a second access network different than the first access network. Note that in various embodiments, the first and second transceivers may be the same transceiver and/or may share communication hardware or other communications resources to communicate with one or more network functions in a mobile communication network.

The processor 705 establishes a multiaccess data connection with the mobile communication network (e.g., a MA PDU Session). Here, the multiaccess data connection is configured to apply a set of steering rules (e.g., ATSSS rules), where each steering rule contains at least a traffic descriptor and a steering mode. In some embodiments, the multiaccess data connection is also configured to apply a set of QoS rules, which rules map each uplink data packet to one of the QoS flows of the multiaccess data connection, where each QoS flow supports data transmission with different QoS handling.

The processor 705 establishes a plurality of QUIC connections, where each QUIC connection supports data transmission over the first access network and the second access network. The QUIC connections are established over the multiaccess data connection when it is determined (based on the steering rules) that some traffic on the multiaccess data connection is to be steering using the MPQUIC steering functionality. The number of QUIC connections depends on the number of QoS flows configured for the MA PDU Session, e.g., one QUIC connection per QoS flow.

The processor 705 detects a data packet to be transmitted via the multiaccess data connection and selects a first steering rule in the set of steering rules, where the first steering rule contains a first steering mode and a first traffic descriptor that matches the data packet. Typically, the data packet includes data provided by an application in the apparatus, which should be transmitted to a destination address and port. The traffic descriptor matches the data packet when, e.g., the destination address and/or port of the data packet matches the destination address and/or port in the traffic descriptor.

The processor 705 selects a first QUIC connection of the plurality of the QUIC connections to be used for sending the data packet. The data packet is mapped to a particular QoS flow, based on the QoS rules of the multiaccess data connection. The first QUIC connection is QUIC connection associated with this QoS flow. The processor 705 allocates a new stream in the first QUIC connection, where the new stream is configured to transmit data traffic using the first steering mode and sends the data packet using the new stream.

In some embodiments, each QUIC connection has at least one QUIC stream, where each QUIC stream is associated with context information, said context information comprising at least one of: a steering mode, a transport mode (e.g., stream mode or datagram mode), a destination IP address, a destination port, etc. The context information is used to determine how data associated with the QUIC stream is to be transferred. In some embodiments, establishing the plurality of QUIC connections includes indicating a QoS flow identity associated with each QUIC connection. In certain embodiments, the associated QoS flow identity is indicated using a HTTP SETTINGS parameter or a QUIC transport parameter.

In some embodiments, selecting the first QUIC connection includes mapping the data packet to a particular QoS flow based on the QoS rules of the multiaccess data connection, where the first QUIC connection is associated with the particular QoS flow. In some embodiments, the data packet initiates a new data flow (i.e., UDP flow), the data flow being a sequence of data segments going to the same destination address and port, where the new QUIC stream is used to send all data segments of the new data flow.

In some embodiments, sending the data packet using the new stream includes selecting a transport mode to use to send the data packet. In one embodiment, the transport mode is a stream mode. In another embodiment, the transport mode is a datagram mode. In further embodiments, the new QUIC stream has a first Stream ID. In certain embodiments, sending the data packet using the stream mode includes encapsulating the data packet within a STREAM frame and sending the STREAM frame via the first QUIC connection. Here, the STREAM frame has a stream ID equal to the first Stream ID.

In certain embodiments, sending the data packet using the datagram mode includes encapsulating the data packet within a DATAGRAM frame with a quarter stream ID and sending the DATAGRAM frame via the first QUIC connection. Here, the new stream ID is equal to the quarter stream ID multiplied by four. Note that a DATAGRAM frame is always sent outside of a stream.

In some embodiments, selecting the transport mode includes identifying a data delivery preference (or data delivery requirement) associated with the data packet, said data delivery preference is identified using one or more of: a toleration of out-of-order packets, a need for packet duplication, a transport preference of an application generating the data packet, the first steering mode, or combinations thereof.

In certain embodiments, the processor 705 selects to send the data packet using the stream mode when the data delivery preference indicates that in-sequence reception is required and/or no duplicate packet reception is required. For example, the processor 705 may decide to use the stream mode when it knows that reliable data delivery is preferred, i.e., delivery without out-of-order packets and without duplicated packets. The processor 705 may identify that reliable data delivery is preferred from the application's transport preferences and/or from the selected steering mode, which may lead to out-of-order packets and/or duplicated packets.

In certain embodiments, the processor 705 selects to send the data packet using the datagram mode when the data delivery preference indicates that in-sequence reception is not required and/or does not indicate that no duplicate packet reception is required. For example, the processor 705 may decide to use the datagram mode when it knows that unreliable data delivery is acceptable, i.e., delivery that may have out-of-order packets and duplicated packets. The processor 705 may identify that unreliable data delivery is acceptable from the application's transport preferences and/or from the selected steering mode, which may not lead to out-of-order packets and/or duplicated packets.

The memory 710, in one embodiment, is a computer readable storage medium. In some embodiments, the memory 710 includes volatile computer storage media. For example, the memory 710 may include a RAM, including dynamic RAM ("DRAM"), synchronous dynamic RAM ("SDRAM"), and/or static RAM ("SRAM"). In some embodiments, the memory 710 includes non-volatile computer storage media. For example, the memory 710 may include a hard disk drive, a flash memory, or any other suitable non-volatile computer storage device. In some embodiments, the memory 710 includes both volatile and non-volatile computer storage media.

In some embodiments, the memory 710 stores data related to establishing a multipath unicast link and/or mobile operation. For example, the memory 710 may store various parameters, panel/beam configurations, resource assignments, policies, and the like as described above. In certain embodiments, the memory 710 also stores program code and related data, such as an operating system or other controller algorithms operating on the apparatus 700.

The input device 715, in one embodiment, may include any known computer input device including a touch panel, a button, a keyboard, a stylus, a microphone, or the like. In some embodiments, the input device 715 may be integrated with the output device 720, for example, as a touchscreen or similar touch-sensitive display. In some embodiments, the input device 715 includes a touchscreen such that text may be input using a virtual keyboard displayed on the touchscreen and/or by handwriting on the touchscreen. In some embodiments, the input device 715 includes two or more different devices, such as a keyboard and a touch panel.

The output device 720, in one embodiment, is designed to output visual, audible, and/or haptic signals. In some embodiments, the output device 720 includes an electronically controllable display or display device capable of outputting visual data to a user. For example, the output device 720 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 720 may include a wearable display separate from, but communicatively coupled to, the rest of the user equipment apparatus 700, such as a smart watch, smart glasses, a heads-up display, or the like. Further, the output device 720 may be a component of a smart phone, a personal digital assistant, a television, a table computer, a notebook (laptop) computer, a personal computer, a vehicle dashboard, or the like.

In certain embodiments, the output device 720 includes one or more speakers for producing sound. For example, the output device 720 may produce an audible alert or notification (e.g., a beep or chime). In some embodiments, the output device 720 includes one or more haptic devices for producing vibrations, motion, or other haptic feedback. In some embodiments, all or portions of the output device 720 may be integrated with the input device 715. For example, the input device 715 and output device 720 may form a touchscreen or similar touch-sensitive display. In other embodiments, the output device 720 may be located near the input device 715.

The transceiver 725 communicates with one or more network functions of a mobile communication network via one or more access networks. The transceiver 725 operates under the control of the processor 705 to transmit messages, data, and other signals and also to receive messages, data, and other signals. For example, the processor 705 may selectively activate the transceiver 725 (or portions thereof) at particular times in order to send and receive messages.

The transceiver 725 includes at least transmitter 730 and at least one receiver 735. One or more transmitters 730 may be used to provide UL communication signals to a cellular base unit 121 and/or an access point 131, such as the UL transmissions described herein. Similarly, one or more receivers 735 may be used to receive DL communication signals from the cellular base unit 121 and/or an access point 131, as described herein. Although only one transmitter 730 and one receiver 735 are illustrated, the user equipment apparatus 700 may have any suitable number of transmitters 730 and receivers 735. Further, the transmitter(s) 730 and the receiver(s) 735 may be any suitable type of transmitters and receivers. In one embodiment, the transceiver 725 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 725, transmitters 730, and receivers 735 may be implemented as physically separate components that access a shared hardware resource and/or software resource, such as for example, the network interface 740.

In various embodiments, one or more transmitters 730 and/or one or more receivers 735 may be implemented and/or integrated into a single hardware component, such as a multi-transceiver chip, a system-on-a-chip, an Application-Specific Integrated Circuit ("ASIC"), or other type of hardware component. In certain embodiments, one or more transmitters 730 and/or one or more receivers 735 may be implemented and/or integrated into a multi-chip module. In some embodiments, other components such as the network interface 740 or other hardware components/circuits may be integrated with any number of transmitters 730 and/or receivers 735 into a single chip. In such embodiment, the transmitters 730 and receivers 735 may be logically configured as a transceiver 725 that uses one more common control signals or as modular transmitters 730 and receivers 735 implemented in the same hardware chip or in a multi-chip module.

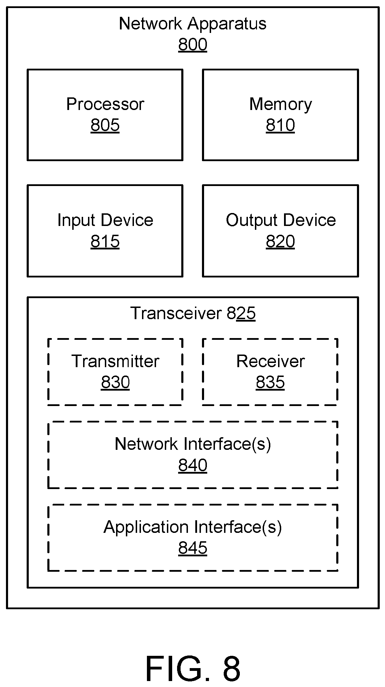

Figure 8 depicts one embodiment of a network apparatus 800 that may be used for multipath QUIC for ATSSS using stream-aware steering mode, according to embodiments of the disclosure. In some embodiments, the network apparatus 800 may implement a UPF. In further embodiments, the network apparatus 800 may implement a remote host. Furthermore, network apparatus 800 may include a processor 805, a memory 810, an input device 815, an output device 820, a transceiver 825.

In some embodiments, the input device 815 and the output device 820 are combined into a single device, such as a touchscreen. In certain embodiments, the network apparatus 800 may not include any input device 815 and/or output device 820. In various embodiments, the network apparatus 800 may include one or more of: the processor 805, the memory 810, and the transceiver 825, and may not include the input device 815 and/or the output device 820.

As depicted, the transceiver 825 includes at least one transmitter 830 and at least one receiver 835. Here, the transceiver 825 communicates with one or more remote units 105. Additionally, the transceiver 825 may support at least one network interface 840 and/or application interface 845. The application interface(s) 845 may support one or more APIs. The network interface(s) 840 may support 3GPP reference points, such as Uu, N1, N2 and N3. Other network interfaces 840 may be supported, as understood by one of ordinary skill in the art.

The processor 805, in one embodiment, may include any known controller capable of executing computer-readable instructions and/or capable of performing logical operations. For example, the processor 805 may be a microcontroller, a microprocessor, a CPU, a GPU, an auxiliary processing unit, a FPGA, or similar programmable controller. In some embodiments, the processor 805 executes instructions stored in the memory 810 to perform the methods and routines described herein. The processor 805 is communicatively coupled to the memory 810, the input device 815, the output device 820, and the transceiver 825.

In various embodiments, the network apparatus 800 is a RAN node (e.g., gNB) that communicates with one or more UEs, as described herein. In such embodiments, the processor 805 controls the network apparatus 800 to perform the above described RAN behaviors. When operating as a RAN node, the processor 805 may include an application processor (also known as "main processor") which manages application-domain and operating system ("OS") functions and a baseband processor (also known as "baseband radio processor") which manages radio functions.

In various embodiments, the network apparatus 800 includes a UPF that communicates with one or more entities in a mobile communication network (e.g., via a transceiver 825 and/or network interface 840), as described herein. In such embodiments, the processor 805 controls the network apparatus 800 to perform the above described UPF entity behaviors.

In various embodiments, the processor 805 establishes multiple QUIC connections with a UE. In some embodiments, each QUIC connection has at least one QUIC stream, where each QUIC stream is associated with context information, said context information comprising a specific steering mode, a specific transport mode (e.g., stream mode or datagram mode), a destination IP address, a destination port, etc. The context information is used to determine how data associated with the QUIC stream is to be transferred. Specifically, the processor 805 uses the context information to determine how to forward (e.g., to a remote host) the received data that is associated with a QUIC stream.

The memory 810, in one embodiment, is a computer readable storage medium. In some embodiments, the memory 810 includes volatile computer storage media. For example, the memory 810 may include a RAM, including dynamic RAM ("DRAM"), synchronous dynamic RAM ("SDRAM"), and/or static RAM ("SRAM"). In some embodiments, the memory 810 includes non-volatile computer storage media. For example, the memory 810 may include a hard disk drive, a flash memory, or any other suitable non-volatile computer storage device. In some embodiments, the memory 810 includes both volatile and non-volatile computer storage media.

In some embodiments, the memory 810 stores data related to establishing a multipath unicast link and/or mobile operation. For example, the memory 810 may store parameters, configurations, resource assignments, policies, and the like, as described above. In certain embodiments, the memory 810 also stores program code and related data, such as an operating system or other controller algorithms operating on the apparatus 800.

The input device 815, in one embodiment, may include any known computer input device including a touch panel, a button, a keyboard, a stylus, a microphone, or the like. In some embodiments, the input device 815 may be integrated with the output device 820, for example, as a touchscreen or similar touch-sensitive display. In some embodiments, the input device 815 includes a touchscreen such that text may be input using a virtual keyboard displayed on the touchscreen and/or by handwriting on the touchscreen. In some embodiments, the input device 815 includes two or more different devices, such as a keyboard and a touch panel.

The output device 820, in one embodiment, is designed to output visual, audible, and/or haptic signals. In some embodiments, the output device 820 includes an electronically controllable display or display device capable of outputting visual data to a user. For example, the output device 820 may include, but is not limited to, an LCD display, an LED display, an OLED display, a projector, or similar display device capable of outputting images, text, or the like to a user. As another, non-limiting, example, the output device 820 may include a wearable display separate from, but communicatively coupled to, the rest of the network apparatus 800, such as a smart watch, smart glasses, a heads-up display, or the like. Further, the output device 820 may be a component of a smart phone, a personal digital assistant, a television, a table computer, a notebook (laptop) computer, a personal computer, a vehicle dashboard, or the like.

In certain embodiments, the output device 820 includes one or more speakers for producing sound. For example, the output device 820 may produce an audible alert or notification (e.g., a beep or chime). In some embodiments, the output device 820 includes one or more haptic devices for producing vibrations, motion, or other haptic feedback. In some embodiments, all or portions of the output device 820 may be integrated with the input device 815. For example, the input device 815 and output device 820 may form a touchscreen or similar touch-sensitive display. In other embodiments, the output device 820 may be located near the input device 815.

The transceiver 825 includes at least transmitter 830 and at least one receiver 835. One or more transmitters 830 may be used to communicate with the UE, as described herein. Similarly, one or more receivers 835 may be used to communicate with network functions in the PLMN and/or RAN, as described herein. Although only one transmitter 830 and one receiver 835 are illustrated, the network apparatus 800 may have any suitable number of transmitters 830 and receivers 835. Further, the transmitter(s) 830 and the receiver(s) 835 may be any suitable type of transmitters and receivers.

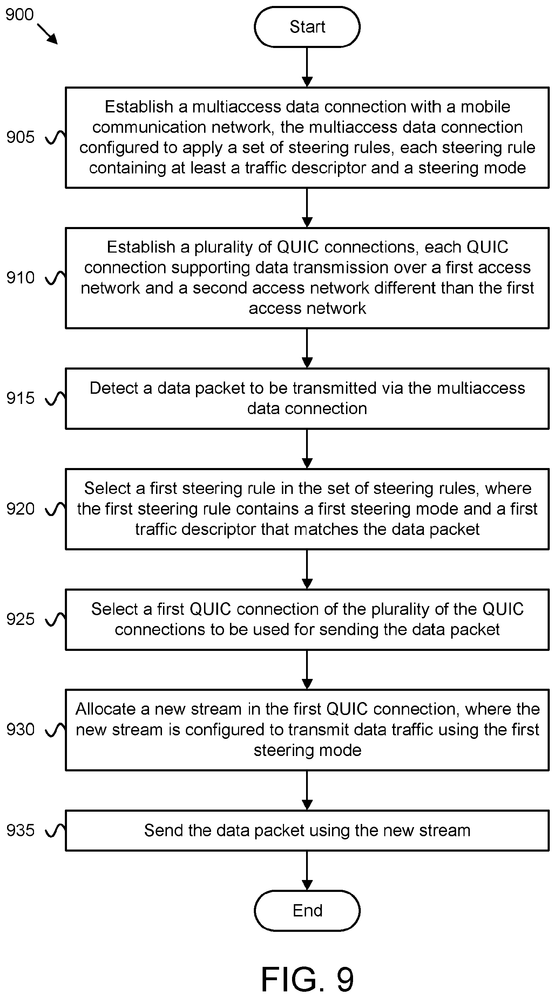

Figure 9 depicts one embodiment of a method 900 for multipath QUIC for ATSSS using stream-aware steering mode, according to embodiments of the disclosure. In various embodiments, the method 900 is performed by a UE device, such as the remote unit 105, the UE 201, and/or the user equipment apparatus 700, as described above. In some embodiments, the method 900 is performed by a processor, such as a microcontroller, a microprocessor, a CPU, a GPU, an auxiliary processing unit, a FPGA, or the like.

The method 900 begins and establishes 905 a multiaccess data connection with a mobile communication network, the multiaccess data connection configured to apply a set of steering rules. Here, each steering rule contains at least a traffic descriptor and a steering mode. The method 900 includes establishing 910 a plurality of QUIC connections, each QUIC connection supporting data transmission over a first access network and a second access network different than the first access network. The method 900 includes detecting 915 a data packet to be transmitted via the multiaccess data connection.

The method 900 includes selecting 920 a first steering rule in the set of steering rules, where the first steering rule contains a first steering mode and a first traffic descriptor that matches the data packet. The method 900 includes selecting 925 a first QUIC connection of the plurality of the QUIC connections to be used for sending the data packet. The method 900 includes allocating 930 a new stream in the first QUIC connection, where the new stream is configured to transmit data traffic using the first steering mode. The method 900 includes sending 935 the data packet using the new stream. The method 900 ends.

Disclosed herein is a first apparatus for multipath QUIC for ATSSS using stream-aware steering mode, according to embodiments of the disclosure. The first apparatus may be implemented by a UE device, such as the remote unit 105, the UE 201, and/or the user equipment apparatus 700, described above. The first apparatus includes a processor, a first transceiver and a second transceiver (i.e., each transceiver implementing a network interface). Using the first transceiver, the first apparatus communicates with a mobile communication network via a first access network. Using the second transceiver, the first apparatus communicates with the mobile communication network via a second access network different than the first access network.

The processor establishes a multiaccess data connection with the mobile communication network (e.g., a MA PDU Session). Here, the multiaccess data connection is configured to apply a set of steering rules (e.g., ATSSS rules), where each steering rule contains at least a traffic descriptor and a steering mode. The processor establishes a plurality of QUIC connections, where each QUIC connection supports data transmission over the first access network and the second access network. The processor detects a data packet to be transmitted via the multiaccess data connection and selects a first steering rule in the set of steering rules, where the first steering rule contains a first steering mode and a first traffic descriptor that matches the data packet.

The processor selects a first QUIC connection of the plurality of the QUIC connections to be used for sending the data packet. The processor allocates a new stream in the first QUIC connection, where the new stream is configured to transmit data traffic using the first steering mode and sends the data packet using the new stream.

In some embodiments, each QUIC connection has at least one QUIC stream, where each QUIC stream is associated with context information, said context information comprising one or more of: a steering mode, a transport mode, a destination IP address, and a destination port. In some embodiments, establishing the plurality of QUIC connections includes indicating a QoS flow identity associated with each QUIC connection. In certain embodiments, the associated QoS flow identity is indicated using a HTTP SETTINGS parameter or a QUIC transport parameter.

In some embodiments, selecting the first QUIC connection includes mapping the data packet to a particular QoS flow based on the QoS rules of the multiaccess data connection, where the first QUIC connection is associated with the particular QoS flow. In some embodiments, the data packet initiates a new data flow (i.e., UDP flow), the data flow being a sequence of data segments going to the same destination address and port, where the new QUIC stream is used to send all data segments of the new data flow.

In some embodiments, sending the data packet using the new stream includes selecting a transport mode to use to send the data packet. In one embodiment, the transport mode is a stream mode. In another embodiment, the transport mode is a datagram mode. In further embodiments, the new QUIC stream has a first Stream ID. In certain embodiments, sending the data packet using the stream mode includes encapsulating the data packet within a STREAM frame and sending the STREAM frame via the first QUIC connection. Here, the STREAM frame has a stream ID equal to the first Stream ID.

In certain embodiments, sending the data packet using the datagram mode includes encapsulating the data packet within a DATAGRAM frame with a quarter stream ID and sending the DATAGRAM frame via the first QUIC connection. Here, the new stream ID is equal to the quarter stream ID multiplied by four. Note that a DATAGRAM frame is always sent outside of a stream.

In some embodiments, selecting the transport mode includes identifying a data delivery preference (or data delivery requirement) associated with the data packet, said data delivery preference is identified using one or more of: a toleration of out-of-order packets, a need for packet duplication, a transport preference of an application generating the data packet, the first steering mode, or combinations thereof.

In certain embodiments, the processor selects to send the data packet using the stream mode when the data delivery preference indicates that in-sequence reception is required and/or no duplicate packet reception is required. In certain embodiments, the processor selects to send the data packet using the datagram mode when the data delivery preference indicates that in-sequence reception is not required and/or does not indicate that no duplicate packet reception is required.

Disclosed herein is a first method for multipath QUIC for ATSSS using stream-aware steering mode, according to embodiments of the disclosure. The first method may be performed by a UE, such as the remote unit 105, the UE 201, and/or the user equipment apparatus 700, described above. The first method includes establishing a multiaccess data connection (e.g., a MA PDU Session) with a mobile communication network, the multiaccess data connection configured to apply a set of steering rules (e.g., ATSSS rules), where each steering rule contains at least a traffic descriptor and a steering mode. The first method includes establishing a plurality of QUIC connections, each QUIC connection supporting data transmission over a first access network and a second access network different than the first access network. The first method includes detecting a data packet to be transmitted via the multiaccess data connection and selecting a first steering rule in the set of steering rules, where the first steering rule contains a first steering mode and a first traffic descriptor that matches the data packet. The first method includes selecting a first QUIC connection of the plurality of the QUIC connections to be used for sending the data packet. The first method includes allocating a new stream in the first QUIC connection, where the new stream is configured to transmit data traffic using the first steering mode and sending the data packet using the new stream.

In some embodiments, each QUIC connection has at least one QUIC stream, where each QUIC stream is associated with context information, said context information comprising one or more of: a steering mode, a transport mode, a destination IP address, and a destination port. In some embodiments, establishing the plurality of QUIC connections includes indicating a QoS flow identity associated with each QUIC connection. In certain embodiments, the associated QoS flow identity is indicated using a HTTP SETTINGS parameter or a QUIC transport parameter.

In some embodiments, selecting the first QUIC connection includes mapping the data packet to a particular QoS flow based on the QoS rules of the multiaccess data connection, where the first QUIC connection is associated with the particular QoS flow. In some embodiments, the data packet initiates a new data flow (i.e., UDP flow), the data flow being a sequence of data segments going to the same destination address and port, where the new QUIC stream is used to send all data segments of the new data flow.

In some embodiments, sending the data packet using the new stream includes selecting a transport mode to use to send the data packet. In one embodiment, the transport mode is a stream mode. In another embodiment, the transport mode is a datagram mode. In further embodiments, the new QUIC stream has a first Stream ID. In certain embodiments, sending the data packet using the stream mode includes encapsulating the data packet within a STREAM frame and sending the STREAM frame via the first QUIC connection. Here, the STREAM frame has a stream ID equal to the first Stream ID.

In certain embodiments, sending the data packet using the datagram mode includes encapsulating the data packet within a DATAGRAM frame with a quarter stream ID and sending the DATAGRAM frame via the first QUIC connection. Here, the new stream ID is equal to the quarter stream ID multiplied by four. Note that a DATAGRAM frame is always sent outside of a stream.

In some embodiments, selecting the transport mode includes identifying a data delivery preference (or data delivery requirement) associated with the data packet, said data delivery preference is identified using one or more of: a toleration of out-of-order packets, a need for packet duplication, a transport preference of an application generating the data packet, the first steering mode, or combinations thereof.

In certain embodiments, the first method includes selecting to send the data packet using the stream mode when the data delivery preference indicates that in-sequence reception is required and/or no duplicate packet reception is required. In certain embodiments, the first method includes selecting to send the data packet using the datagram mode when the data delivery preference indicates that in-sequence reception is not required and/or does not indicate that no duplicate packet reception is required.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. An apparatus (700) comprising:
a first transceiver (725) that communicates with a mobile communication network (140) via a first access network (120);
a second transceiver (725) that communicates with the mobile communication network (140) via a second access network (130) different than the first access network (120); and
a processor (705) configured to:
establish a multiaccess data connection with the mobile communication network (140), the multiaccess data connection (140) configured to apply a set of steering rules, wherein each steering rule comprises at least a traffic descriptor and a steering mode;
establish a plurality of QUIC connections (148), each QUIC connection (148) supporting data transmission over the first access network (120) and the second access network (130);
detect a data packet to be transmitted via the multiaccess data connection;
select a first steering rule in the set of steering rules, wherein the first steering rule comprises a first steering mode and a traffic descriptor that matches the data packet;
select a first QUIC connection (148) of the plurality of the QUIC connections (148) to be used for sending the data packet;
allocate a new QUIC stream in the first QUIC connection (148), wherein the new stream is configured to transmit data traffic using the first steering mode; and
send the data packet using the new stream,
wherein each QUIC connection (148) has at least one QUIC stream, wherein each QUIC stream is associated with context information, said context information comprising one or more of: a steering mode, a transport mode, a destination IP address, and a destination port.

2. The apparatus (700) of claim 1, wherein establishing the plurality of QUIC connections (148) comprises indicating a QoS flow identity associated with each QUIC connection (148).

3. The apparatus (700) of claim 2, wherein the associated QoS flow identity is indicated using a HTTP SETTINGS parameter or a QUIC transport parameter.

4. The apparatus (700) of claim 1, wherein selecting the first QUIC connection (148) comprises mapping the data packet to a particular QoS flow based on the QoS rules of the multiaccess data connection, wherein the first QUIC connection (148) is associated with the particular QoS flow.

5. The apparatus (700) of claim 1, wherein sending the data packet using the new stream comprises selecting a transport mode to use to send the data packet.

6. The apparatus (700) of claim 5, wherein the new QUIC stream has a first Stream identifier, ID, wherein the selected transport mode is a stream mode, and wherein sending the data packet using the stream mode comprises:
encapsulating the data packet within a STREAM frame with stream ID equal to the first Stream ID; and
sending the STREAM frame via the first QUIC connection.

7. The apparatus (700) of claim 5, wherein the new QUIC stream has a first Stream identifier, ID, wherein the selected transport mode is a datagram mode, and wherein sending the data packet using the datagram mode comprises:
encapsulating the data packet within a DATAGRAM frame with a quarter stream ID, wherein the quarter stream ID multiplied by four (4) is equal to the new stream ID; and
sending the DATAGRAM frame via the first QUIC connection.

8. The apparatus (700) of claim 5, wherein selecting the transport mode comprises identifying a data delivery preference associated with the data packet, said data delivery preference is identified using one or more of: a toleration of out-of-order packets, a need for packet duplication, a transport preference of an application generating the data packet, the first steering mode, or combinations thereof.

9. The apparatus (700) of claim 8, wherein the processor (705) selects to send the data packet using a datagram mode when the data delivery preference indicates that in-sequence reception is not required and/or does not indicate that no duplicate packet reception is required.

10. The apparatus (700) of claim 8, wherein the processor (705) selects to send the data packet using a stream mode when the data delivery preference indicates that in-sequence reception is required and/or no duplicate packet reception is required.

11. The apparatus (700) of claim 1, wherein the data packet initiates a new data flow, the data flow being a sequence of data segments going to the same destination address and port, wherein the new QUIC stream is used to send all data segments of the new data flow.

12. A method at a User Equipment, UE (105), the method comprising:
establishing a multiaccess data connection with a mobile communication network (140), the multiaccess data connection configured to apply a set of steering rules, wherein each steering rule comprises at least a traffic descriptor and a steering mode;
establishing a plurality of QUIC connections (148), each QUIC connection (148) supporting data transmission over a first access network (120) and a second access network (130) different than the first access network (120);
detecting a data packet to be transmitted via the multiaccess data connection;
selecting a first steering rule in the set of steering rules, wherein the first steering rule comprises a first steering mode and a traffic descriptor that matches the data packet;
selecting a first QUIC connection (148) of the plurality of the QUIC connections (148) to be used for sending the data packet;
allocating a new QUIC stream in the first QUIC connection (148), wherein the new stream is configured to transmit data traffic using the first steering mode; and
sending the data packet using the new stream
wherein each QUIC connection (148) has at least one QUIC stream, wherein each QUIC stream is associated with context information, said context information comprising one or more of: a steering mode, a transport mode, a destination IP address, and a destination port.

13. The method of claim 12, wherein establishing the plurality of QUIC connections (148) comprises indicating a QoS flow identity associated with each QUIC connection (148).

## Patentansprüche

1. Einrichtung (700), umfassend:
einen ersten Transceiver (725), der über ein erstes Zugangsnetz (120) mit einem Mobilkommunikationsnetz (140) kommuniziert;
einen zweiten Transceiver (725), der über ein zweites Zugangsnetz (130), das sich vom ersten Zugangsnetz (120) unterscheidet, mit dem Mobilkommunikationsnetz (140) kommuniziert; und
einen Prozessor (705), der ausgebildet ist zum:
Herstellen einer Mehrfachzugangsdatenverbindung mit dem Mobilkommunikationsnetz (140), wobei die Mehrfachzugangsdatenverbindung (140) dazu ausgebildet ist, einen Satz von Lenkregeln anzuwenden, wobei jede Lenkregel mindestens einen Verkehrsdeskriptor und einen Lenkmodus umfasst;
Herstellen einer Vielzahl von QUIC-Verbindungen (148), wobei jede QUIC-Verbindung (148) die Datenübertragung über das erste Zugangsnetz (120) und das zweite Zugangsnetz (130) unterstützt;
Erfassen eines Datenpakets, das über die Mehrfachzugangsdatenverbindung übertragen werden soll;
Auswählen einer ersten Lenkregel in dem Satz von Lenkregeln, wobei die erste Lenkregel einen ersten Lenkmodus und einen Verkehrsdeskriptor, der mit dem Datenpaket zusammenpasst, umfasst;
Auswählen einer ersten QUIC-Verbindung (148) der Vielzahl der QUIC-Verbindungen (148), die zum Senden des Datenpakets verwendet werden soll;
Zuweisen eines neuen QUIC-Stroms in der ersten QUIC-Verbindung (148), wobei der neue Strom dazu ausgebildet ist, Datenverkehr unter Verwendung des ersten Lenkmodus zu übertragen; und
Senden des Datenpakets unter Verwendung des neuen Stroms,
wobei jede QUIC-Verbindung (148) mindestens einen QUIC-Strom aufweist, wobei jeder QUIC-Strom mit Kontextinformationen verknüpft ist, wobei die Kontextinformationen eines oder mehrere umfassen von: einem Lenkmodus, einem Transportmodus, einer Ziel-IP-Adresse und einem Zielport.

2. Einrichtung (700) nach Anspruch **1,** wobei Herstellen der Vielzahl von QUIC-Verbindungen (148) Angeben einer QoS-Fluss-Identität umfasst, die mit jeder QUIC-Verbindung (148) verknüpft ist.

3. Einrichtung (700) nach Anspruch 2, wobei die verknüpfte QoS-Fluss-Identität unter Verwendung eines HTTP-SETTINGS-Parameters oder eines QUIC-Transportparameters angegeben ist.

4. Einrichtung (700) nach Anspruch **1,** wobei Auswählen der ersten QUIC-Verbindung (148) Abbilden des Datenpakets auf einen bestimmten QoS-Fluss basierend auf den QoS-Regeln der Mehrfachzugangsdatenverbindung umfasst, wobei die erste QUIC-Verbindung (148) mit dem bestimmten QoS-Fluss verknüpft ist.

5. Einrichtung (700) nach Anspruch **1,** wobei das Senden des Datenpakets unter Verwendung des neuen Stroms Auswählen eines Transportmodus umfasst, der zum Senden des Datenpakets verwendet werden soll.

6. Einrichtung (700) nach Anspruch 5, wobei der neue QUIC-Strom eine erste Strom-Kennung, ID, aufweist, wobei der ausgewählte Transportmodus ein Strom-Modus ist und wobei das Senden des Datenpakets unter Verwendung des Strom-Modus umfasst:
Einkapseln des Datenpakets innerhalb eines STREAM-Frames mit einer Strom-ID, die der ersten Strom-ID entspricht; und
Senden des STREAM-Frames über die erste QUIC-Verbindung.

7. Einrichtung (700) nach Anspruch 5, wobei der neue QUIC-Strom eine erste Strom-Kennung, ID, aufweist, wobei der ausgewählte Transportmodus ein Datagramm-Modus ist und wobei das Senden des Datenpakets unter Verwendung des Datagramm-Modus umfasst:
Einkapseln des Datenpakets innerhalb eines DATAGRAM-Frames mit einer Viertel-Strom-ID, wobei die Viertel-Strom-ID multipliziert mit vier (4) der neuen Strom-ID entspricht; und
Senden des DATAGRAM-Frames über die erste QUIC-Verbindung.

8. Einrichtung (700) nach Anspruch 5, wobei Auswählen des Transportmodus Identifizieren einer mit dem Datenpaket verknüpften Datenzustellungspräferenz umfasst, wobei die Datenzustellungspräferenz unter Verwendung eines oder mehrerer identifiziert wird von: einer Toleranz gegenüber Paketen in falscher Reihenfolge, einem Bedarf an Paketverdopplung, einer Transportpräferenz einer Anwendung, die das Datenpaket erzeugt, dem ersten Lenkmodus oder Kombinationen davon.

9. Einrichtung (700) nach Anspruch 8, wobei der Prozessor (705) auswählt, das Datenpaket unter Verwendung eines Datagramm-Modus zu senden, wenn die Datenzustellungspräferenz angibt, dass ein Empfang der Reihe nach nicht erforderlich ist, und/oder nicht angibt, dass kein Empfang doppelter Pakete erforderlich ist.

10. Einrichtung (700) nach Anspruch 8, wobei der Prozessor (705) auswählt, das Datenpaket unter Verwendung eines Strom-Modus zu senden, wenn die Datenzustellungspräferenz angibt, dass ein Empfang der Reihe nach erforderlich ist und/oder kein Empfang doppelter Pakete erforderlich ist.

11. Einrichtung (700) nach Anspruch 1, wobei das Datenpaket einen neuen Datenfluss einleitet, wobei der Datenfluss eine Folge von Datensegmenten ist, die an dieselbe Zieladresse und denselben Zielport gehen, wobei der neue QUIC-Strom verwendet wird, um alle Datensegmente des neuen Datenflusses zu senden.

12. Verfahren an einem Benutzerendgerät, UE (105), das Verfahren umfassend:
Herstellen einer Mehrfachzugangsdatenverbindung mit einem Mobilkommunikationsnetz (140), wobei die Mehrfachzugangsdatenverbindung dazu ausgebildet ist, einen Satz von Lenkregeln anzuwenden, wobei jede Lenkregel mindestens einen Verkehrsdeskriptor und einen Lenkmodus umfasst;
Herstellen einer Vielzahl von QUIC-Verbindungen (148), wobei jede QUIC-Verbindung (148) die Datenübertragung über ein erstes Zugangsnetz (120) und ein zweites Zugangsnetz (130), das sich von dem ersten Zugangsnetz (120) unterscheidet, unterstützt;
Erfassen eines Datenpakets, das über die Mehrfachzugangsdatenverbindung übertragen werden soll;
Auswählen einer ersten Lenkregel in dem Satz von Lenkregeln, wobei die erste Lenkregel einen ersten Lenkmodus und einen Verkehrsdeskriptor, der mit dem Datenpaket zusammenpasst, umfasst;
Auswählen einer ersten QUIC-Verbindung (148) der Vielzahl der QUIC-Verbindungen (148), die zum Senden des Datenpakets verwendet werden soll;
Zuweisen eines neuen QUIC-Stroms in der ersten QUIC-Verbindung (148), wobei der neue Strom dazu ausgebildet ist, Datenverkehr unter Verwendung des ersten Lenkmodus zu übertragen; und
Senden des Datenpakets unter Verwendung des neuen Stroms,
wobei jede QUIC-Verbindung (148) mindestens einen QUIC-Strom aufweist, wobei jeder QUIC-Strom mit Kontextinformationen verknüpft ist, wobei die Kontextinformationen eines oder mehrere umfassen von: einem Lenkmodus, einem Transportmodus, einer Ziel-IP-Adresse und einem Zielport.

13. Verfahren nach Anspruch 12, wobei Herstellen der Vielzahl von QUIC-Verbindungen (148) Angeben einer QoS-Fluss-Identität umfasst, die mit jeder QUIC-Verbindung (148) verknüpft ist.

## Revendications

1. Appareil (700) comprenant :
un premier émetteur-récepteur (725) qui communique avec un réseau de communication mobile (140) via un premier réseau d'accès (120) ;
un second émetteur-récepteur (725) qui communique avec le réseau de communication mobile (140) via un second réseau d'accès (130) différent du premier réseau d'accès (120) ; et
un processeur (705) configuré pour :
établir une connexion de données à accès multiple avec le réseau de communication mobile (140), la connexion de données à accès multiple (140) étant configurée pour appliquer un ensemble de règles de pilotage, dans lequel chaque règle de pilotage comprend au moins un descripteur de trafic et un mode de pilotage ;
établir une pluralité de connexions QUIC (148), chaque connexion QUIC (148) prenant en charge la transmission de données sur le premier réseau d'accès (120) et le second réseau d'accès (130) ;
détecter un paquet de données à transmettre via la connexion de données à accès multiple ;
sélectionner une première règle de pilotage dans l'ensemble de règles de pilotage, dans lequel la première règle de pilotage comprend un premier mode de pilotage et un descripteur de trafic qui correspond au paquet de données ;
sélectionner une première connexion QUIC (148) parmi la pluralité des connexions QUIC (148) à utiliser pour l'envoi du paquet de données ;
attribuer un nouveau flux QUIC dans la première connexion QUIC (148), dans lequel le nouveau flux est configuré pour transmettre un trafic de données en utilisant le premier mode de pilotage ; et
envoyer le paquet de données en utilisant le nouveau flux,
dans lequel chaque connexion QUIC (148) présente au moins un flux QUIC, dans lequel chaque flux QUIC est associé à des informations de contexte, lesdites informations de contexte comprenant un ou plusieurs parmi : un mode de pilotage, un mode de transport, une adresse IP de destination et un port de destination.

2. Appareil (700) selon la revendication 1, dans lequel l'établissement de la pluralité de connexions QUIC (148) comprend l'indication d'une identité de flux QoS associée à chaque connexion QUIC (148).

3. Appareil (700) selon la revendication 2, dans lequel l'identité de flux QoS associée est indiquée à l'aide d'un paramètre HTTP SETTINGS ou d'un paramètre de transport QUIC.

4. Appareil (700) de la revendication 1, dans lequel la sélection de la première connexion QUIC (148) comprend le mappage du paquet de données à un flux QoS particulier sur la base des règles QoS de la connexion de données à accès multiple, dans lequel la première connexion QUIC (148) est associée au flux QoS particulier.

5. Appareil (700) selon la revendication 1, dans lequel l'envoi du paquet de données en utilisant le nouveau flux comprend la sélection d'un mode de transport à utiliser pour envoyer le paquet de données.

6. Appareil (700) selon la revendication 5, dans lequel le nouveau flux QUIC présente un premier identifiant, ID, de flux, dans lequel le mode de transport sélectionné est un mode flux, et dans lequel l'envoi du paquet de données en utilisant le mode flux comprend :
l'encapsulation du paquet de données dans une trame STREAM avec un ID de flux égal au premier ID de flux ; et
l'envoi de la trame STREAM via la première connexion QUIC.

7. Appareil (700) selon la revendication 5, dans lequel le nouveau flux QUIC présente un premier identifiant, ID, de flux, dans lequel le mode de transport sélectionné est un mode datagramme, et dans lequel l'envoi du paquet de données en utilisant le mode datagramme comprend :
l'encapsulation du paquet de données dans une trame DATAGRAM avec un ID de flux quart, dans lequel l'ID de flux quart multiplié par quatre (4) est égal au nouvel ID de flux ; et
l'envoi de la trame DATAGRAM via la première connexion QUIC.

8. Appareil (700) selon la revendication 5, dans lequel la sélection du mode de transport comprend l'identification d'une préférence de livraison de données associée au paquet de données, ladite préférence de livraison de données est identifiée à l'aide d'un ou plusieurs parmi : une tolérance des paquets en désordre, un besoin de duplication de paquet, une préférence de transport d'une application générant le paquet de données, le premier mode de pilotage, ou des combinaisons de ceux-ci.

9. Appareil (700) selon la revendication 8, dans lequel le processeur (705) sélectionne l'envoi du paquet de données en utilisant un mode datagramme lorsque la préférence de livraison des données indique que la réception séquentielle n'est pas requise et/ou n'indique pas qu'aucune réception de paquets en double n'est requise.

10. Appareil (700) selon la revendication 8, dans lequel le processeur (705) sélectionne l'envoi du paquet de données en utilisant un mode flux lorsque la préférence de livraison des données indique qu'une réception séquentielle est requise et/ou qu'aucune réception de paquets en double n'est requise.

11. Appareil (700) selon la revendication 1, dans lequel le paquet de données initie un nouveau flux de données, le flux de données étant une séquence de segments de données allant vers la même adresse et le même port de destination, dans lequel le nouveau flux QUIC est utilisé pour envoyer tous les segments de données du nouveau flux de données.

12. Procédé au niveau d'un équipement utilisateur, UE (105), le procédé comprenant :
l'établissement d'une connexion de données à accès multiple avec un réseau de communication mobile (140), la connexion de données à accès multiple étant configurée pour appliquer un ensemble de règles de pilotage, dans lequel chaque règle de pilotage comprend au moins un descripteur de trafic et un mode de pilotage ;
l'établissement d'une pluralité de connexions QUIC (148), chaque connexion QUIC (148) prenant en charge la transmission de données sur un premier réseau d'accès (120) et un second réseau d'accès (130) différent du premier réseau d'accès (120) ;
la détection d'un paquet de données à transmettre via la connexion de données à accès multiple ;
la sélection d'une première règle de pilotage dans l'ensemble de règles de pilotage, dans lequel la première règle de pilotage comprend un premier mode de pilotage et un descripteur de trafic qui correspond au paquet de données ;
la sélection d'une première connexion QUIC (148) parmi la pluralité des connexions QUIC (148) à utiliser pour l'envoi du paquet de données;
l'attribution d'un nouveau flux QUIC dans la première connexion QUIC (148), dans lequel le nouveau flux est configuré pour transmettre un trafic de données en utilisant le premier mode de pilotage ; et
l'envoi du paquet de données en utilisant le nouveau flux,
dans lequel chaque connexion QUIC (148) présente au moins un flux QUIC, dans lequel chaque flux QUIC est associé à des informations de contexte, lesdites informations de contexte comprenant un ou plusieurs parmi : un mode de pilotage, un mode de transport, une adresse IP de destination et un port de destination.

13. Procédé selon la revendication 12, dans lequel l'établissement de la pluralité de connexions QUIC (148) comprend l'indication d'une identité de flux QoS associée à chaque connexion QUIC (148).
